# EUROPÄISCHE PATENTSCHRIFT

(11) **EP 3 438 023 B1**
(45) Veröffentlichungstag und Bekanntmachung des Hinweises auf die Patenterteilung: **20.07.2022**
(21) Anmeldenummer: 17184245.3
(22) Anmeldetag: 01.08.2017
(51) Int. Cl.: B65G 1/137, A61J 7/00, G07F 17/00

(54) **KOMMISSIONIERVORRICHTUNG UND VERFAHREN ZUM AUSLAGERN VON ARZNEIMITTELZUSAMMENSTELLUNGEN**
PICKING DEVICE AND METHOD FOR RETRIEVING DRUG COMPOSITIONS FROM STORAGE
DISPOSITIF ET PROCÉDÉ DE PRÉPARATION DES COMMANDES PERMETTANT DE TRANSFÉRER DES COMPOSITIONS MÉDICAMENTEUSES

(43) Veröffentlichungstag der Anmeldung: 06.02.2019
(73) Patentinhaber: Becton Dickinson Rowa Germany GmbH, 53539 Kelberg (DE)
(72) Erfinder: WINGENTER, Dirk, 54550 Daun (DE); HELLENBRAND, Christoph, 56761 Kaifenheim (DE)
(74) Vertreter: Zenz Patentanwälte Partnerschaft mbB

(56) Entgegenhaltungen:
- EP-A1- 2 960 184
- EP-A2- 0 909 725
- DE-A1- 4 336 885
- DE-U1- 29 515 627
- US-A1- 2013 092 700
- US-A1- 2014 094 960

## Beschreibung

Die vorliegende Erfindung betrifft eine Kommissioniervorrichtung zum Ausgeben von Arzneimittelzusammenstellungen, und insbesondere zum Ausgeben von in Lagerbehältern angeordneten Arzneimittelzusammenstellungen, sowie ein Verfahren zum Auslagern von in einer erfindungsgemäßen Kommissioniervorrichtung gelagerten Arzneimittelzusammenstellungen.

Automatisierte Kommissioniervorrichtungen werden häufig in Apotheken eingesetzt, um Arzneimittelpackungen platzsparend lagern und rasch ausgeben zu können. Die Arzneimittelpackungen werden in den bekannten, insbesondere für Apotheken geeigneten, Kommissioniervorrichtungen chaotisch gelagert, d. h. die Arzneimittelpackungen werden in der Vorrichtung nicht an vorbestimmten Lagerplätzen gelagert, sondern an den Lagerplätzen, bei denen gerade ausreichend Platz vorhanden ist. Überflüssiges Leervolumen kann so vermieden werden, d. h. die Anzahl an gelagerten Arzneimittelpackungen pro Quadratmeter Grundfläche ist erheblich erhöht. Eine entsprechende Kommissioniervorrichtung ist beispielsweise in der DE 195 09 951 offenbart. Eine alternative zu der chaotischen Lagerung ist die 25 sortenreine Lagerung in beispielsweise geneigten Lagerschächten, wie es in der DE 295 15 27 U1 beschrieben ist.

Die nach dem Prinzip der chaotischen Lagerung arbeitenden Kommissioniervorrichtungen sind auf eine spezielle Art von Arzneimittelpackungen beschränkt, die für die eingesetzten Bediengeräte und die in den Kommissioniervorrichtungen genutzten Lagerflächen geeignet sind. Mit der in der DE 195 09 951 offenbarten Kommissioniervorrichtung werden üblicherweise Arzneimittelpackungen mit rechteckiger Grundfläche gelagert.

Die vorgenannte Art von Kommissioniervorrichtungen ist insbesondere dann sinnvoll einsetzbar, wenn einem Patienten mittels Rezept eine ganze Arzneimittelpackung bzw. mehrere Arzneimittelpackungen verordnen werden, wie dies in großen Teilen von Europa üblich ist.

In beispielsweise den USA ist es jedoch üblich, dass ein Patient patientenindividuelle Arzneimittelzusammenstellungen verschrieben bekommt, die eine exakt vorgegebene Anzahl von Arzneimitteln bestimmter Arten umfassen, die von dafür zugelassenem Personal in beispielsweise einer Apotheke zusammengestellt werden und im Anschluss daran in Lagerbeutel verbracht werden, die bis zur Abholung durch einen Patienten gelagert werden.

In der US20140094960A1 beispielsweise wird ein System beschrieben, bei welchem Arzneimittelzusammenstellungen in flaschenförmigen Behältnissen auf Lagerplätzen zwischengelagert werden, bis diese von einem Kunden angefordert werden. Wenn dies geschieht, werden die Arzneimittelbehälter zu einer Abgabestation bewegt, von wo ein Apothekenmitarbeiter oder der Kunde den Arzneimittelbehälter entnehmen kann. Ein ähnlich arbeitendes System ist in der US20130092700A1 beschrieben. Auch bei diesem werden die Arzneimittelzusammenstellungen in Arzneimittelbehältern auf Lagerplätzen bis zur Abgabeanforderung durch einen Kunden zwischengelagert.

EP 2 960 184 offenbart eine Kommissioniervorrichtung zum Ausgeben von Arzneimittelzusammenstellungen, aufweisend zumindest eine Lagervorrichtung mit einer Mehrzahl von Lagerplätzen für Arzneimittelzusammenstellungen, einem vor der Regalreihe horizontal und vertikal verfahrbaren und mit einer Steuereinrichtung gekoppelten Bediengerät, zumindest einer Einlagerungseinrichtung, mit welcher Lagerbehälter für Arzneimittelzusammenstellungen in die Lagervorrichtung bewegt werden und von welcher das Bediengerät Lagerbehälter Arzneimittelzusammenstellungen entnehmen kann,zumindest eine erste Identifiziereinrichtung zum Identifizieren von Arzneimittelzusammenstellungen.

Die Lagerung und Ausgabe kann mit einem an die spezielle Lagerform in Lagerbeuteln angepassten Lager- und Abgabeautomaten vorgenommen werden. Beispielsweise offenbaren die Druckschriften US 7,123,989 B2 und US 9,105,142 B2 Verfahren und Vorrichtungen zum Ausgeben von patientenindividuell zusammengestellten, in Lagerbeuteln angeordneten Arzneimittelportionen. Da für jeden Patienten patientenindividuelle Arzneimittelzusammenstellungen bereitet werden, ist es bei einem solchen System wesentlich, dass ein Lagerbeutel die in diesem angeordnete Arzneimittelzusammenstellung eindeutig wiedergibt und eine Verknüpfung zwischen Lagerbeutel und Arzneimittelzusammenstellung vorhanden ist. Dazu ist auf den Lagerbeuteln ein entsprechender Identifizierer angebracht, der von den in den vorgenannten US-Patenten offenbarten Vorrichtungen lesbar ist. Der Identifizierer kann beispielsweise ein Barcode sein.

Nachteilig an der offenbarten Vorrichtung ist insbesondere, dass diese mechanisch sehr aufwendig ist, und dass aufgrund dieser mechanischen Komplexität nur geringe Ausgabegeschwindigkeiten möglich sind und ein erhöhter Wartungsaufwand erforderlich ist.

Es ist daher Aufgabe der vorliegenden Erfindung eine Kommissioniervorrichtung bereitzustellen, die zum Ausgeben von patientenindividuell zusammengestellten Arzneimittelzusammenstellungen geeignet ist, die aber zugleich konstruktiv einfach gehalten ist, einen geringen Wartungsaufwand erfordert und eine Vielzahl von Arzneimittelzusammenstellungen pro Zeitintervall ausgeben kann. Ferner ist es Aufgabe der Erfindung, ein Verfahren zum Ausgeben solcher Arzneimittelzusammenstellungen bereitzustellen.

Im Nachfolgenden ist mit dem Begriff "Arzneimittelzusammenstellung" auch stets der Plural umfasst. Wenn also von einer Arzneimittelzusammenstellung gesprochen wird, können auch mehrere umfasst sein (wo dies im Sachzusammenhang Sinn ergibt).

Die Aufgabe wird erfindungsgemäß gelöst durch eine Kommissioniervorrichtung zum Ausgeben von in Lagerbehältern angeordneten Arzneimittelzusammenstellungen gemäß Anspruch 1.

Die erfindungsgemäße Kommissioniervorrichtung umfasst zumindest eine Lagervorrichtung mit einer Mehrzahl von Lagerplätzen für Lagerbehälter, einem vor der Regalreihe horizontal und vertikal verfahrbaren und mit einer Steuereinrichtung gekoppelten Bediengerät, zumindest einer Einlagerungseinrichtung, mit welcher Lagerbehälter für Arzneimittelzusammenstellungen in die Lagervorrichtung bewegt werden und von welcher das Bediengerät Lagerbehälter entnehmen kann, sowie zumindest einer ersten Identifiziereinrichtung zum Identifizieren von Arzneimittelzusammenstellungen. Die vorgenannten Bauteile der erfindungsgemäßen Kommissioniervorrichtung bilden den zentralen Lagerbereich für die Arzneimittelzusammenstellungen umfassenden Lagerbehälter. Die vorbeschriebene Lagervorrichtung kann im Hinblick auf die vorgenannten Merkmale bereits aus dem Stand der Technik bekannten Lagervorrichtungen entsprechen.

Die Lagerplätze können beispielsweise mittels zumindest einer Regalreihe mit einer Mehrzahl von übereinander angeordneten, sich jeweils in einer Ebene erstreckenden Regalböden bereitgestellt werden, wobei die Lagerplätze auf den Regalböden ausgebildet sind. Alternativ können die Lagerplätze auch von einfachen Streben bereitgestellt werden, wobei ein Lagerbehälter üblicherweise von zwei Streben gehalten wird; in Abhängigkeit von den Anforderungen an die Warenlagerung und -ausgabe können die beiden vorgenannten Arten der Bereitstellung von Lagerplätzen auch kombiniert sein. Nachfolgend wird davon ausgegangen, dass die Lagerplätze mittels Regalböden bereitgestellt werden.

Erfindungsgemäß umfasst die Lagervorrichtung der Kommissioniervorrichtung darüber hinaus eine Entladeeinrichtung, mit welcher in Lagerbehältern angeordnete Arzneimittelzusammenstellungen an eine mit der Steuereinrichtung gekoppelte Transportvorrichtung übergeben werden.

Bei der erfindungsgemäßen Kommissioniervorrichtung werden Arzneimittel nicht in Arzneimittelpackungen direkt auf den Regalböden gelagert, sondern es werden Arzneimittelzusammenstellungen, beispielsweise in Beuteln oder in Flaschen, die wiederum in Beuteln angeordnet sein können, in Lagerbehältern angeordnet, die wiederum auf den Lagerplätzen gelagert werden. Die vorgenannte Entladeeinrichtung dient dazu, die in den Lagerbehältern angeordneten Arzneimittelzusammenstellungen an eine Transportvorrichtung zu übergeben.

Zur Abgabe der Arzneimittelzusammenstellungen an einen Benutzer umfasst die erfindungsgemäße Kommissioniervorrichtung zumindest eine mit der Steuereinrichtung gekoppelte Abgabestation, die jeweils eine Entnahmestelle sowie eine Benutzerschnittstelle zur Kommunikation mit einem Benutzer aufweist. Der Transportvorrichtung werden die Arzneimittelzusammenstellungen von der Entladevorrichtung übergeben und die Transportvorrichtung verbindet die Lagervorrichtung mit jeder Abgabestation derart, dass jeder Abgabestation Arzneimittelzusammenstellungen zugeführt werden können.

Die erfindungsgemäße Kommissioniervorrichtung umfasst eine zentrale Lagervorrichtung, bei der eine zuverlässige und ausgereifte Technik eingesetzt wird. Durch die Kombination der zumindest teilweise vorbekannten Lagervorrichtung mit einer Entladeeinrichtung, einer Transportvorrichtung sowie zumindest einer Abgabestation ist es möglich, basierend auf einer bekannten und bewährten Lagertechnik, eine Kommissioniervorrichtung bereitzustellen, die zum Ausgeben von patientenindividuell zusammengestellten Arzneimittelzusammenstellungen geeignet ist, die aber zugleich konstruktiv einfach gehalten ist, einen geringen Wartungsaufwand erfordert und eine Vielzahl von Arzneimittelzusammenstellungen pro Zeitintervall ausgeben kann.

Da die zumindest eine Abgabestation erfindungsgemäß eine Benutzerschnittstelle umfasst, ist es bei der erfindungsgemäßen Kommissioniervorrichtung auch möglich, dass mit dieser die patientenindividuell angepassten Arzneimittelzusammenstellungen an verschiedene Arten von Benutzern ausgegeben werden.

So ist es beispielsweise denkbar, dass bei einer Abgabestation die Arzneimittelzusammenstellungen an einen "qualifizierten Benutzer" übergeben werden, womit im Rahmen der vorliegenden Erfindung ein Benutzer gemeint ist, der nach den Vorschriften des Landes, in dem die erfindungsgemäße Vorrichtung eingesetzt wird, zur Abgabe von Arzneimitteln an Patienten ermächtigt ist.

Bei einer anderen Abgabestation kann der Patient selbst, der nachfolgend "einfacher Benutzer" genannt wird, eine Arzneimittelzusammenstellung ausgeben lassen. Die vorgenannten Benutzer müssen sich mittels der Benutzerschnittstelle authentifizieren, wobei die zur Authentifizierung notwendigen Schritte von der Art des Benutzers abhängen.

Bei einem einfachen Benutzer kann es erforderlich sein, dass dieser sich über die Benutzerschnittstelle identifiziert, beispielsweise durch Vorlage eines Personalausweises, und die abzuholende Arzneimittelzusammenstellung bezahlt, beispielsweise durch Eingabe einer Kreditkarte, wohingegen es bei einem qualifizierten Benutzer ausreichen kann, dass dieser sich über eine in der Steuereinrichtung hinterlegte Personalnummer identifiziert, wobei der Bezahlvorgang für die Arzneimittelzusammenstellung bei einer anderen Stelle innerhalb beispielsweise einer Apotheke durchgeführt werden kann. Mit der erfindungsgemäßen Kommissioniervorrichtung ist es auch möglich, verschiedene Abgabearten zu kombinieren; eine Ausführungsform kann zum Beispiel zwei Abgabestationen umfassen, eine wird von einem qualifizierten Benutzer bedient, während die andere von einem einfachen Benutzer, beispielsweise dem Patienten, genutzt werden kann.

Anders als bei den bekannten Kommissioniervorrichtungen werden bei der erfindungsgemäßen Kommissioniervorrichtung in der Lagervorrichtung keine Arzneimittelpackungen, sondern Arzneimittelzusammenstellungen in Lagerbehältern gelagert. Um die Arzneimittelzusammenstellungen aus diesen Lagerbehältern zu entfernen, umfasst die erfindungsgemäße Kommissioniervorrichtung eine Entladeeinrichtung, welche die Arzneimittelzusammenstellungen aus den Lagerbehältern auf die Transportvorrichtung übergibt.

Wie bereits oben ausgeführt, werden bei den bekannten Kommissioniervorrichtungen vorzugsweise rechteckige Arzneimittelpackungen gelagert. Um die bekannte und bewährte Technik zumindest teilweise übernehmen zu können, sind die Lagerbehälter der erfindungsgemäßen Kommissioniervorrichtung vorzugsweise ebenfalls zumindest im Greifbereich für das Bediengerät rechteckig ausgebildet, d. h. die Ein- bzw. Auslagerung von Lagerbehältern läuft ähnlich zu der bekannten Ein- und Auslagerung von Arzneimittelpackungen. Eine umfangreiche Anpassung der Lagervorrichtung im Hinblick auf die Lagerung selbst ist nicht erforderlich.

In Abhängigkeit von den einzulagernden Arzneimittelzusammenstellungen können Lagerbehälter unterschiedlicher Größe verwendet werden. Sofern Lagerbehälter unterschiedlicher Größe verwendet werden, muss der Kommissioniervorrichtung mitgeteilt werden, welche Behältergröße für eine Arzneimittelzusammenstellung verwendet wird. Diese Information ist notwendig für die korrekte Wahl des Lagerortes/Lagerplatzes und um das Bediengerät entsprechend ansteuern zu können.

Um diese Information bereitzustellen, kann beispielweise das einlagernde Bedienpersonal zu jeder Arzneimittelzusammenstellung eine spezielle Kennung für einen verwendeten Lagerbehälter eingeben, wobei dieser Kennung genaue Maße des verwendeten Lagerbehälters zugeordnet sind. Alternativ ist es möglich, bereits mit einem Identifizierer (beispielsweise einem Barcode) auf der Arzneimittelzusammenstellung die Art bzw. Größe des Lagerbehälters vorzugeben. Ferner (oder zusätzlich) ist es möglich, den Lagerbehälter bei der Einlagerung zu vermessen, wobei dies abhängig von der genauen Ausgestaltung der Lagerbehälter relativ aufwendig sein kann.

Um eine reibungslose und rasche Übergabe der Lagerbehälter an die Entladeeinrichtung zu gewährleisten, ist es bei einer bevorzugten Ausführungsform vorgesehen, dass die Entladeeinrichtung eine Behälteraufnahme aufweist, welche entsprechend einem Lagerplatz ausgebildet ist bzw. an diesen anpassbar ist, so dass von dem Bediengerät mit "üblichen" Lagerbewegungen Lagerbehälter an die Behälteraufnahme überführbar sind. Unter dem Begriff der "üblichen" Lagerbewegungen seien hier solche verstanden, die das Bediengerät ausführt, um Lagerbehälter von und auf Lagerplätze und von der Einlagerungseinrichtung zu bewegen. Bei einer entsprechenden Ausführungsform ist baulich keine Anpassung des Bediengerätes zur Übergabe von Lagerbehältern an die Entladeeinrichtung notwendig, womit man auf bekannte Bediengeräte zurückgreifen kann, was wiederum den Wartungsaufwand für die gesamte Kommissioniervorrichtung weiter vermindert.

Erfindungsgemäß wird die bzw. werden die in einem Lagerbehälter angeordneten Arzneimittelzusammenstellung/-en von der Entladeeinrichtung an die Transporteinrichtung übergeben. Dazu kann die Entladeeinrichtung beispielsweise einen Greifer umfassen, der die Arzneimittelzusammenstellungen aus dem Lagerbehälter entnimmt und an die Transporteinrichtung übergibt.

Die Verwendung eines Greifers ist jedoch konstruktiv aufwendig und erhöht wiederum den Wartungsaufwand. Bei einer bevorzugten Ausführungsform ist es daher vorgesehen, dass die Entladestation als eine Schwerkraft-Entladestation ausgeführt ist, mit welcher in Lagerbehältern angeordnete Arzneimittelzusammenstellungen bei einer Aufnahmestelle über eine Entladeöffnung eines Lagerbehälters auf die Transportvorrichtung übergeben werden. Unter "Schwerkraft-Entladestation" soll jede Entladestation verstanden werden, bei welcher sich die Arzneimittelzusammenstellungen über eine Entladeöffnung der Lagerbehälter mittels Schwerkraft aus dem Lagerbehälter bewegen.

Dies kann beispielsweise erreicht werden, indem der Lagerbehälter in der Entladestation derart um 180° gedreht wird, dass eine im Lagerzustand nach oben weisende Entladeöffnung nach unten zeigt und die Arzneimittelzusammenstellungen aus den Lagerbehälter fallen. Alternativ kann der Lagerbehälter einen freigebbaren Bodenbereich aufweisen, der zum Übergeben der Arzneimittelzusammenstellungen an die Transporteinrichtung temporär geöffnet wird.

Gelegentlich kann es vorkommen, dass die Arzneimittelzusammenstellungen in dem Lagerbehälter leicht verkeilt sind. Um in einem solchen Fall die schwerkraftbedingte Entladung zu unterstützen ist es bei einer Ausführungsform vorgesehen, dass die Entladeeinrichtung als eine Kippstation ausgeführt ist, mit welcher in Lagerbehältern angeordnete Arzneimittelzusammenstellungen bei einer Aufnahmestelle auf die Transportvorrichtung gekippt werden. Bei dem Entladen der Lagerbehälter wird die Kippbewegung durch einen Anschlag plötzlich gestoppt und die kinetische Energie der Arzneimittelzusammenstellungen kann die Verkeilung überwinden. Gelegentlich kann es vorkommen, dass auch die Kippbewegung nicht ausreichend ist, Arzneimittelzusammenstellungen aus einem Lagerbehälter zu entfernen. Um bei der Entfernung der Arzneimittelzusammenstellungen aus Lagerbehältern (weiter) zu unterstützen, sie es bei einer Kippstation oder einer anders ausgeführten Entladestation, ist es bei einer bevorzugten Ausführungsform vorgesehen, dass die Entladestation eine Ausstoßeinrichtung umfasst, mit welcher in Lagerbehältern angeordnete Arzneimittelzusammenstellungen über die Entladeöffnung eines Lagerbehälters auf die Transportvorrichtung gestoßen werden.

Die Ausstoßeinrichtung kann derart ausgeführt sein, dass die Arzneimittelzusammenstellungen mit einem Stoßmittel, das durch eine Öffnung in einem Lagerbehälter bewegt wird, ausgestoßen werden. Alternativ kann die Ausstoßeinrichtung eine Druckluftdüse umfassen, und die Arzneimittelzusammenstellungen können mittels Druckluft aus den Lagerbehältern bewegt werden.

Üblicherweise ist die Lagervorrichtung der erfindungsgemäßen Kommissioniervorrichtung rechteckig ausgebildet, und zwar mit zwei parallelen Regalreihen, die zwischen sich eine Gasse ausbilden, in welcher das Bediengerät horizontal und vertikal verfahrbar ist. Um zu vermeiden, dass die Transportvorrichtung bis in die Lagervorrichtung hineingeführt werden muss, was u. a. eine Verminderung der Lagerkapazität der Lagervorrichtung mit sich brächte, ist es bei einer bevorzugten Ausführungsform vorgesehen, dass die Entladeeinrichtung eine verfahrbare Behälteraufnahme aufweist, welche zu entleerende Lagerbehälter in einer Parkposition aufnimmt und zu einer Entleerungsposition bewegt. Bei einer entsprechend ausgebildeten Entladeeinrichtung ist es beispielsweise möglich, dass die Transportvorrichtung abschnittsweise als horizontales Förderband parallel an einer der Seiten der Lagervorrichtung ausgebildet ist. In der Parkposition, die mit einem Lagerplatz vergleichbar ist, wird ein Lagerbehälter von der verfahrbaren Behälteraufnahme aufgenommen bzw. von dem Bediengerät an die Behälteraufnahme übergeben und dann mit der verfahrbaren Behälteraufnahme in eine Entleerungsposition bewegt, bei welcher die in dem Lagerbehälter angeordneten Arzneimittelzusammenstellungen an die Transportvorrichtung übergeben werden, beispielsweise indem der Lagerbehälter gekippt wird.

Bei Verwendung einer verfahrbaren Behälteraufnahme ist es bei einer bevorzugten Ausführungsform darüber hinaus vorgesehen, dass die Behälteraufnahme eine Halteeinrichtung aufweist, mit welcher Lagerbehälter temporär und lösbar gehalten werden können. Eine solche Halteeinrichtung verhindert ein Verrutschen des Lagerbehälters beim Transport, auch kann die Entleerung einfacher durchgeführt werden.

Nach dem Entleeren der Lagerbehälter können diese von dem Bediengerät wiederaufgenommen und bei einem freien Lagerplatz der Lagervorrichtung abgestellt werden. Diese Vorgehensweise verschwendet jedoch wertvollen Lagerplatz, so dass es bei einer bevorzugten Ausführungsform der erfindungsgemäßen Kommissioniervorrichtung vorgesehen ist, dass der Entladeeinrichtung eine Behälter-Sammeleinrichtung zugeordnet ist, welche bei der Entladeeinrichtung entleerte Lagerbehälter aufnimmt. Eine Lagerung entleerter Lagerbehälter auf Lagerplätzen der Lagervorrichtung wird damit vermieden, es können mehr Lagerbehälter mit darin angeordneten Arzneimittelzusammenstellungen in der Lagervorrichtung vorgehalten werden. Die Behälter-Sammeleinrichtung ist vorzugweise außerhalb der Lagervorrichtung ausgebildet.

Wie die entleerten Lagerbehälter von der Entladeeinrichtung an die Behälter-Sammeleinrichtung übergeben werden, hängt von deren Anordnung innerhalb der erfindungsgemäßen Kommissioniervorrichtung ab. Um die Übergabe der entleerten Sammelbehälter von der Entladeeinrichtung an die Behälter-Sammeleinrichtung besonders rasch ausführen zu können, ist es bei einer bevorzugten Ausführungsform vorgesehen, dass die Behälter-Sammeleinrichtung derart unterhalb eines Abschnitts der Entladeeinrichtung angeordnet ist, dass entleerte Lagerbehälter durch Lösen der Halteeinrichtung der Behälter-Sammeleinrichtung zuführbar sind. Sobald der Lagerbehälter, beispielsweise durch Kippen, entleert ist, wird die Halteeinrichtung bei einer dafür vorgesehenen Übergabestelle gelöst und der Lagerbehälter wird schwerkraftbedingt der Behälter-Sammeleinrichtung zugeführt. Dazu kann die Behälter-Sammeleinrichtung beispielsweise senkrecht ausgebildet sein und direkt unter einer entsprechend ausgebildeten Bodenöffnung der Entladeeinrichtung angeordnet sein. Bei einer entsprechenden Ausführungsform ist es bevorzugt, dass die Entladeeinrichtung einen Abschnitt aufweist, der außerhalb der Lagervorrichtung angeordnet ist und unter welchem ein Aufnahmeabschnitt (der Behälter-Sammeleinrichtung) für Lagerbehälter angeordnet ist.

Um für den Benutzer eine einfache Entnahme der entleerten Lagerbehälter aus der Behälter-Sammeleinrichtung zu ermöglichen, ist es bei einer bevorzugten Ausführungsform vorgesehen, dass die Behälter-Sammeleinrichtung eine von außerhalb der Lagervorrichtung erreichbare Zugriffsöffnung aufweist.

Die erfindungsgemäße Kommissioniervorrichtung umfasst mindestens eine Abgabestation, über welche die Arzneimittelzusammenstellungen an einen Benutzer übergeben werden können. Dazu wird ein Lagerbehälter, der die auszulagernde Arzneimittelzusammenstellung umfasst, bei der Entladeeinrichtung entleert, die Arzneimittelzusammenstellung mittels der Transportvorrichtung zu einer Abgabestation transportiert und an den Benutzer übergeben. Um eine besonders rasche Ausgabe einer Arzneimittelzusammenstellung zu ermöglichen, ist es bei einer bevorzugten Ausführungsform der Kommissioniervorrichtung vorgesehen, dass diese, neben der zumindest einen Abgabestation, bei der Lagervorrichtung eine zumindest abschnittsweise im Aktionsradius des Bediengerätes angeordnete und von außerhalb der Lagervorrichtung erreichbare Abgabeeinrichtung aufweist. Beispielsweise ist es denkbar, dass ein qualifizierter Benutzer, beispielsweise ein Apotheker, über eine entsprechende Abgabeeinrichtung eine Auslagerung eines Lagerbehälters samt Arzneimittelzusammenstellung anfordert, um die Arzneimittelzusammenstellung an einen wartenden Kunden übergeben zu können. Dazu wird ein Lagerbehälter mit einer auszulagernden Arzneimittelzusammenstellung bei einem im Aktionsradius des Bediengerätes angeordneten Abschnitt der Abgabeeinrichtung an diese übergeben und in einen Zugriffsbereich des Benutzers geführt. Eine solche Abgabeeinrichtung kann beispielsweise als einfache Rutsche ausgeführt sein.

Wie oben dargelegt, kann die erfindungsgemäße Kommissioniervorrichtung eine Behälter-Sammeleinrichtung zur Aufnahme entleerter Lagerbehälter umfassen. Alternativ oder zusätzlich kann die Kommissioniervorrichtung bei einer weiteren bevorzugten Ausführungsform eine von außerhalb der Lagervorrichtung erreichbare Behälter-Bereitstelleinrichtung für entleerte Lagerbehälter aufweisen. Beispielsweise kann es sich bei dieser Behälter-Bereitstelleinrichtung um eine Art Rutsche handeln, auf welcher von dem Bediengerät entleerte Lagerbehälter abgesetzt werden, die dann einer Entnahmestelle der Behälter-Bereitstelleinrichtung zugeführt werden. Bei einer entsprechenden Kommissioniervorrichtung werden die entleerten Lagerbehälter also unmittelbar nach Entleerung zur Wiederverwendung bereitgestellt, wodurch die Anzahl der im Umlauf befindlichen Lagerbehälter vermindert werden kann. Bei einer besonders bevorzugten Ausführungsform ist ein Abschnitt der Behälter-Bereitstelleinrichtung derart angeordnet, dass diesem Abschnitt entleerte Lagerbehälter direkt von der Entladeeinrichtung zugeführt werden können.

Die erfindungsgemäße Kommissioniervorrichtung weist zumindest eine Abgabestation mit einer Entnahmestelle sowie einer Benutzerschnittstelle auf. Damit eine Arzneimittelzusammenstellung über die Abgabestation abgegeben wird, ist eine Authentifizierung des Benutzers erforderlich. Die Art und Weise der Authentifizierung ist dabei, wie oben bereits beschrieben, davon abhängig, ob es sich bei dem Benutzer um einen qualifizierten oder einen einfachen Benutzer handelt. Bei einer bevorzugten Ausführungsform der erfindungsgemäßen Kommissioniervorrichtung ist es vorgesehen, dass die Kommissioniervorrichtung von einem qualifizierten sowie von einem einfachen Benutzer bedient werden kann. Dazu ist es vorgesehen, dass die Kommissioniervorrichtung zumindest zwei Abgabestationen aufweist, die für unterschiedliche Zugriffsarten unterschiedlicher Benutzer geeignet sind. Die beiden Abgabestationen können identisch ausgebildet sein, wobei in diesem Fall lediglich unterschiedliche Authentifizierungsverfahren erforderlich sind; bei einem qualifizierten Benutzer kann es beispielsweise ausreichend sein, dass dieser sich nur einmal innerhalb eines vorgegebenen Zeitintervalls authentifiziert.

Die beiden Abgabestationen können aber auch an die Art der Benutzer angepasst sein, so dass eine Abgabestation lediglich von einem qualifizierten Benutzer bedient werden kann, wohingegen die zweite Abgabestation derart ausgebildet sein kann, dass auch ein einfacher Benutzer diese bedienen kann. Welcher Benutzer eine Abgabestation bedienen kann, kann über eine spezielle Konfiguration bzw. Ausgestaltung der Benutzerschnittstelle festgelegt sein.

Bei bekannten Kommissioniervorrichtungen ist eine Abgabe von Arzneimitteln, sei es in Form von Arzneimittelzusammenstellungen oder Arzneimittelpackungen, nur dann möglich, wenn ein Benutzer zumindest die Räumlichkeiten betreten kann, in denen die Kommissioniervorrichtung untergebracht ist. Eine solche Beschränkung der Abholmöglichkeit von Arzneimitteln erfüllt jedoch nicht mehr die Anforderungskriterien eines modernen Benutzers. Bei einer bevorzugten Ausführungsform der erfindungsgemäßen Kommissioniervorrichtung ist es daher vorgesehen, dass diese eine Abgabestation umfasst, die von außerhalb eines Gebäudes, in welchem die Lagervorrichtung angeordnet ist, bedienbar ist. Eine entsprechende Abgabestation kann dann beispielsweise als eine sogenannte "Drive-Thru-Station" ausgebildet sein, bei welcher ein Benutzer mit einem Kraftfahrzeug vorfährt, sich bei der Abgabestation identifiziert und nach erfolgreicher Durchführung des vollständigen Authentifizierungsvorgangs eine Arzneimittelzusammenstellung entnimmt. Sofern eine Übergabe von Arzneimitteln in einem Land einen persönlichen Kontakt mit einem qualifizierten Benutzer, beispielsweise einem Apotheker, erforderlich macht, kann eine entsprechend ausgebildete Abgabestation ferner Kommunikationsmöglichkeiten aufweisen, über welche der qualifizierte Benutzer den abholenden, einfachen Benutzer über beispielsweise Risiken und Nebenwirkungen der Arzneimittel informieren kann.

Wie oben dargelegt, umfasst die Kommissioniervorrichtung bei einer bevorzugten Ausführungsform eine Behälter-Bereitstelleinrichtung für entleerte Lagerbehälter. Bei Lagervorrichtungen mit großer Lagerkapazität kommt es regelmäßig vor, dass Arzneimittelzusammenstellungen nicht innerhalb eines bestimmten Zeitraumes ausgelagert werden, da diese nicht von einem Benutzer, für welchen sie zusammengestellt wurden, abgeholt werden. Bei einer bevorzugten Ausführungsform der erfindungsgemäßen Kommissioniervorrichtung ist es daher vorgesehen, dass diese eine Behälter-Ausgabeeinrichtung für Lagerbehälter mit überfälligen Arzneimittelzusammenstellungen aufweist. Wann eine Arzneimittelzusammenstellung als "überfällig" anzusehen ist, kann von einem Bediener der Kommissioniervorrichtung frei vorgegeben werden. Wenn beispielsweise ein Zeitraum von vier Wochen vorgegeben wird, werden von der Kommissioniervorrichtung automatisch sämtliche Arzneimittelzusammenstellungen, die länger als vier Wochen in der Lagervorrichtung gelagert sind, mit Lagerbehälter an die Behälter-Abgabeeinrichtung für überfällige Arzneimittelzusammenstellungen übergeben.

Die erfindungsgemäße Kommissioniervorrichtung umfasst eine erste Identifiziereinrichtung, mit welcher Arzneimittelzusammenstellungen vor der Einlagerung identifiziert werden. Diese erste Identifiziereinrichtung kann beispielsweise der Einlagerungseinrichtung zugeordnet sein und automatisch sämtliche der Einlagerungseinrichtung übergebene Arzneimittelzusammenstellungen identifizieren, und zwar anhand eines einer Arzneimittelzusammenstellung zugeordneten Identifizierers. Bei einem Identifizierer kann es sich beispielsweise um einen Barcode handeln. Welche Informationen ein Identifizierer umfasst hängt u. a. von länderspezifischen Vorgaben, dem verwendeten Warenwirtschaftssystem usw. ab.

Bei einer bevorzugten Ausführungsform der erfindungsgemäßen Kommissioniervorrichtung ist eine zweite Identifiziereinrichtung vorgesehen, mit welcher Arzneimittelzusammenstellungen vor einem Entleeren der Lagerbehälter in der Entladeeinrichtung identifiziert werden. Durch Bereitstellen der zweiten Identifiziereinrichtung wird die Sicherheit hinsichtlich der ausgelagerten Arzneimittelzusammenstellung erhöht. Bei der Einlagerung einer Arzneimittelzusammenstellung wird dieser von der Steuereinrichtung ein leerer Lagerplatz zugeordnet, d. h. es wird eine Verknüpfung zwischen einem Lagerplatz und einer Arzneimittelzusammenstellung hergestellt, so dass die Steuereinrichtung jederzeit weiß, welche Arzneimittelzusammenstellung bei welchem Lagerplatz angeordnet ist. Dabei ist die Art der Arzneimittelzusammenstellung regelmäßig für die Auswahl des Lagerplatzes unerheblich; eine Arzneimittelzusammenstellung, bzw. der entsprechende Lagerbehälter, wird innerhalb der Lagervorrichtung dort gelagert wo Platz ist. Die Lagerung der Lagerbehälter wird also nach den Prinzipien der dynamischen oder chaotischen Lagerhaltung durchgeführt. Ggf. können gewissen Lagerplätze aufgrund ihrer Nähe zu der Entladeeinrichtung bevorzugt sein. Sofern die Lagervorrichtung einen besonderen Lagerplatz für zu kühlende Arzneimittelzusammenstellungen umfasst, wird dies bei der Einlagerung berücksichtigt.

In Ausnahmefällen kann es vorkommen, dass eine Funktionsstörung der Lagervorrichtung vorliegt, und dass Bedienpersonal gezwungen ist, die Lagervorrichtung zum Beheben der Funktionsstörung zu betreten. Dabei kann es passieren, dass das Bedienpersonal ein oder mehrere Lagerbehälter verschiebt, so dass diese auf einen "falschen" Lagerplatz bewegt werden. Unter "falscher" Lagerplatz wird hier ein solcher verstanden, den die Steuereinrichtung nicht mit einer Arzneimittelzusammenstellung verknüpft hat. In diesem Fall kann auf einem Lagerplatz A, auf welchem die Steuereinrichtung eine Arzneimittelzusammenstellung X1 erwartet, durch den Eingriff des Bedienpersonals ein Lagerbehälter mit einer Arzneimittelzusammenstellung X2 angeordnet sein. Bei Anforderung der Arzneimittelzusammenstellung X1 von Lagerplatz A würde dann die Arzneimittelzusammenstellung X2 ausgelagert. Bei der hier diskutierten Ausführungsform findet vor dem Entleeren noch einmal ein Identifizieren der Arzneimittelzusammenstellung statt, so dass abgeglichen werden kann, ob auch die Arzneimittelzusammenstellung, die sich auf dem Lagerplatz befinden soll, tatsächlich auf dem Lagerplatz ist. Zwar ist die Fehleranfälligkeit der hier beschriebenen Lagervorrichtung ausgesprochen gering, eine solche Prüfung kann jedoch insbesondere dann sinnvoll sein, wenn hochsensible Arzneimittelzusammenstellungen gelagert sind.

Die vorliegende Erfindung betrifft ferner ein Verfahren zum Auslagern von in einer Kommissioniervorrichtung in Lagerbehältern angeordneten Arzneimittelzusammenstellungen. Das erfindungsgemäße Verfahren umfasst die Schritte, dass
a) eine auszulagernde Arzneimittelzusammenstellung identifiziert wird, indem ein Benutzer eine auszulagernde Arzneimittelzusammenstellung eindeutig identifizierende Kenndaten bereitstellt und der Lagerplatz innerhalb der Kommissioniervorrichtung ermittelt wird.

Welcher Art die Kenndaten sind, kann von der genauen Verfahrensführung, länderspezifischen Vorgaben und ggf. dem Warenwirtschaftssystem, das zum Betreiben der Kommissioniervorrichtung genutzt wird, abhängen. Wenn beispielsweise ein einfacher Benutzer die Kommissioniervorrichtung zum Auslagern einer Arzneimittelzusammenstellung benutzt, kann es sich bei den Kenndaten u. a. um den Namen des Benutzers und/oder eine ihn eindeutig identifizierende Personennummer, beispielsweise die Sozialversicherungsnummer, handeln. Alternativ kann es vorgesehen sein, zum Bereitstellen der Kenndaten ein Ausweisdokument zu scannen. Neben personenbezogenen Daten können die Kenndaten auch genaue Informationen über die Arzneimittelzusammenstellung als solche umfassen, beispielsweise eine eindeutige laufende Kennziffer oder ähnliches. Es ist auch denkbar, ein Rezept oder ähnliches zur Bereitstellung der Kenndaten einzulesen, Daten einer Kundenkarte oder einen PIN-Code abzufragen oder einen Barcode einzulesen.

Nach dem Identifizieren einer Arzneimittelzusammenstellung wird in einem Schritt
b) ein Bediengerät zu einem der auszulagernden Arzneimittelzusammenstellung zugeordneten Lagerplatz bewegt,
c) mit dem Bediengerät ein bei dem Lagerplatz angeordneter, die Arzneimittelzusammenstellung umfassender Lagerbehälter ergriffen und an eine Behälteraufnahme einer Entladeeinrichtung übergeben,
d) der an die Behälteraufnahme übergebene Lagerbehälter auf die Transportvorrichtung entleert,
e) die Arzneimittelzusammenstellung mit der Transportvorrichtung zu einer Entnahmestelle einer Abgabestation transportiert, und
f) die Entnahmestelle auf Anweisung einer mit der Abgabestation gekoppelten Steuereinrichtung zur Entnahme der Arzneimittelzusammenstellung freigegeben.

Welche Schritte ein Benutzer ausführen muss, damit die Steuereinrichtung Anweisungen zur Freigabe der Arzneimittelzusammenstellung gibt, hängt davon ab, ob ein qualifizierter oder einfacher Benutzer die Abgabestation bedient. Diesbezügliche Details werden auf folgenden Seiten dargelegt.

Wie bereits oben dargelegt, ist die Funktions- und Bauweise der Lagervorrichtung der erfindungsgemäßen Kommissioniervorrichtung teilweise bekannt. Um auch die übliche Funktionsweise bei Übergabe eines Lagerbehälters an die Entladeeinrichtung beibehalten zu können, ist es bei einer bevorzugten Ausführungsform vorgesehen, dass die Behälteraufnahme vor der Übergabe des Lagerbehälters derart angeordnet wird, dass das Bediengerät den Lagerbehälter mit "üblichen" Lagerbewegungen (siehe oben) übergeben kann. Auf diese Weise kann die Übergabe eines Lagerbehälters an die Behälteraufnahme analog zu einem Einlagerungsvorgang eines Lagerbehälters auf einem Lagerplatz durchgeführt werden, weitere (und damit zeitaufwendige) Bewegungsabläufe des Bediengerätes sind nicht notwendig, eine bauliche Anpassung ist ebenfalls nicht notwendig.

Bei einer bevorzugten Ausführungsform des erfindungsgemäßen Verfahrens ist es vorgesehen, dass der Lagerbehälter entleert wird, indem die Behälteraufnahme gekippt wird, so dass Arzneimittelzusammenstellungen auf die Transportvorrichtung fallen. Ein entsprechender Kippvorgang kann besonders einfach ausgelöst werden, ohne dass aufwendige mechanische Einrichtungen bei der Entladeeinrichtung oder an dem Lagerbehälter selbst vorgesehen sein müssen.

Um zu vermeiden, dass die Transportvorrichtung zur Aufnahme der Arzneimittelzusammenstellungen in die Lagervorrichtung hineingeführt werden muss, ist es bei einer bevorzugten Ausführungsform vorgesehen, dass die Behälteraufnahme vor dem Entleeren des Lagerbehälters aus einer Parkposition in eine Entleerungsposition bewegt wird. In der Parkposition nimmt die Behälteraufnahme einen zu entleerenden Lagerbehälter auf. Die Parkposition ist somit mit einem Lagerplatz zu vergleichen. In der Entleerungsposition wird der Lagerbehälter auf die Transporteinrichtung entleert, beispielsweise gekippt. Diese Entleerungsposition kann so gewählt werden, dass die Transportvorrichtung beispielsweise parallel an einer Außenwand der Lagervorrichtung geführt sein kann.

Nach dem Entleeren der Lagerbehälter müssen diese aus der Entladeeinrichtung entfernt werden. Beispielsweise könnte man diese mit dem Bediengerät auf einem freien Lagerplatz der Lagervorrichtung zwischenlagern. Dies würde jedoch kostbaren Lagerplatz verschwenden. Bei einer bevorzugten Ausführungsform ist es daher vorgesehen, dass ein Lagerbehälter nach dem Entleeren in eine Behälter-Sammeleinrichtung oder eine Behälter-Bereitstelleinrichtung überführt wird. In der Behälter-Sammeleinrichtung werden entleerte Lagerbehälter temporär zwischengespeichert, bis diese von einem Bedienpersonal aus der Behälter-Sammeleinrichtung entnommen werden. Im Gegensatz dazu werden die entleerten Lagerbehälter mit der Behälter-Bereitstelleinrichtung dem Bedienpersonal kontinuierlich bereitgestellt, indem die Behälter-Bereitstelleinrichtung derart ausgebildet ist, dass auf einen Abschnitt dieser von außerhalb der Lagereinrichtung zugegriffen werden kann. Wie die entleerten Lagerbehälter in die bzw. zu der Behälter-Sammeleinrichtung oder der Behälter-Bereitstelleinrichtung bewegt werden, hängt von der Anordnung dieser im Hinblick auf die Entladeeinrichtung ab. Wenn die Behälter-Sammeleinrichtung oder zumindest ein Abschnitt der Behälter-Bereitstelleinrichtung unterhalb der Entladeeinrichtung angeordnet ist, können die entleerten Lagerbehälter beispielsweise durch Freigeben einer Bodenöffnung der Entladeeinrichtung mittels Schwerkraft übergeben werden. Gleiches gilt für die Behälter-Bereitstelleinrichtung.

Wie bereits oben ausgeführt, beginnt das Auslagerungsverfahren damit, dass eine auszulagernde Arzneimittelzusammenstellung identifiziert wird. Wie diese Identifizierung durchgeführt wird, kann auch, wie dies oben angedeutet ist, von der Art des Benutzers einer Abgabestation abhängen. Bei einer bevorzugten Ausführungsform ist es vorgesehen, dass eine auszulagernde Arzneimittelzusammenstellung identifiziert wird, indem als Kenndaten Personendaten eines Benutzers bereitgestellt und ausgewertet werden. Auf der Basis der Personendaten wird dann von der Steuereinrichtung eine einem Benutzer zugeordnete auszulagernde Arzneimittelzusammenstellung ermittelt.

Sofern einem Benutzer mehrere Arzneimittelzusammenstellungen zugeordnet sind, ist es bei einer bevorzugten Ausführungsform vorgesehen, dass dem Benutzer die Möglichkeit gegeben wird, die auszugebenen Arzneimittelzusammenstellungen auszuwählen. Dies kann beispielsweise erfolgen, indem die Benutzerschnittstelle auf einer Anzeigeeinrichtung die Mehrzahl der für den Benutzer vorhandenen Arzneimittelzusammenstellungen anzeigt, und der Benutzer diejenigen Arzneimittelzusammenstellungen auswählt, welche ausgegeben werden sollen. Die nicht auszugebenden Arzneimittelzusammenstellungen verbleiben dann in der Kommissioniervorrichtung. Nur einen Teil der Arzneimittelzusammenstellungen auszugeben kann beispielsweise aus Kostengründen erfolgen, oder falls einem Benutzer auch Arzneimittelzusammenstellungen für beispielsweise ein minderjähriges Familienmitglied zugeordnet sind, welches aber für einen längeren Zeitraum nicht anwesend ist; in einem solchen Fall kann die Lagerung in einer dafür speziell vorgesehenen Lagervorrichtung sinnvoller sein.

Sobald eine auszulagernde Arzneimittelzusammenstellung identifiziert ist, beginnt das Ausgabeverfahren, wobei im Laufe dieses Ausgabeverfahrens die Arzneimittelzusammenstellung zu einer Entnahmestelle einer Abgabestation transportiert wird. Sofern es sich bei dem Benutzer um einen einfachen Benutzer handelt, ist es regelmäßig erforderlich, dass dieser einfache Benutzer die Arzneimittelzusammenstellung oder die Arzneimittelzusammenstellungen bezahlt. Die Freigabe der Arzneimittelzusammenstellung durch die Steuereinrichtung erfolgt also erst dann, wenn der Bezahlvorgang erfolgreich abgeschlossen wurde. Es kann jedoch vorkommen, dass der Benutzer nicht gewillt ist, oder schlichtweg nicht in der Lage ist, eine Zahlung vorzunehmen. Da sich die dem Benutzer zugeordnete Arzneimittelzusammenstellung jedoch schon in der Entnahmestelle befindet, ist es in einem solchen Fall erforderlich, dass diese aus der Entnahmestelle entfernt wird. Dazu kann die Abgabestation spezielle Bauteile vorsehen, mittels welcher nicht entnommene Arzneimittelzusammenstellungen aus der Entnahmestelle entfernt werden können. Bei einer bevorzugten Ausführungsform des erfindungsgemäßen Verfahrens ist es hingegen vorgesehen, dass die Schritt a) nachfolgenden Schritte des Verfahrens zum Auslagern nur dann ausgeführt werden, wenn sämtliche mit dem Auslagern verbundenen Benutzerhandlungen erfolgreich ausgeführt wurden. Die vorgenannten Benutzerhandlungen können länderspezifisch sein, oder aber beispielsweise von der auszulagernden Arzneimittelzusammenstellung selbst vorgegeben sein. So kann es z. B. vorkommen, dass Arzneimittelzusammenstellungen in Abhängigkeit von den umfassten Arzneimittelarten kostenpflichtig oder kostenfrei sind. Ferner kann es erforderlich sein, dass ein Benutzer vor Abgabe einer Arzneimittelzusammenstellung bildlich erfasst werden muss oder eine elektronische Unterschrift hinterlassen muss, wobei die Benutzerschnittstelle für sämtliche nationalen Erfordernisse spezielle Mittel bereitstellen kann. Mit der vorgenannten Verfahrensführung kann vermieden werden, dass mit der Auslagerung einer Arzneimittelzusammenstellung begonnen wird, bevor sämtliche erforderlichen Benutzerhandlungen erfolgreich ausgeführt wurden.

Wie bereits oben dargelegt, kann es beispielsweise im Falle einer Fehlfunktion der Lagervorrichtung vorkommen, dass Lagerbehälter durch Bedienpersonal verschoben werden. Um zu vermeiden, dass ggf. falsche Arzneimittelzusammenstellungen abgegeben werden, ist es bei einer bevorzugten Ausführungsform vorgesehen, dass eine in einem Lagerbehälter angeordnete Arzneimittelzusammenstellung vor dem Entleeren des Lagerbehälters mit einer zweiten Identifiziereinrichtung identifiziert und der Lagerbehälter nur dann entleert wird, wenn die identifizierte Arzneimittelzusammenstellung der anhand der Kenndaten identifizierten Arzneimittelzusammenstellung entspricht.

Wenn die identifizierte Arzneimittelzusammenstellung nicht der anhand der Kenndaten identifizierten Arzneimittelzusammenstellung entspricht, wird diese bei einer bevorzugten Ausführungsform aus der Lagervorrichtung ausgelagert. Dieses Auslagern kann beispielsweise derart erfolgen, dass der Lagerbehälter einer - Behälterrückgabeeinrichtung zugeführt wird, die üblicherweise zum Auslagern von abgelaufenen Arzneimittelzusammenstellungen dient. Alternativ kann die Arzneimittelzusammenstellung nicht auf die Transporteinrichtung, sondern auf eine spezielle Rückgabeeinrichtung bewegt werden, über welche die Arzneimittelzusammenstellung aus der Kommissioniervorrichtung bzw. der Lagervorrichtung ausgelagert wird.

Nachfolgend werden unter Bezugnahme auf die Zeichnung verschiedene Ausführungsformen der erfindungsgemäßen Kommissioniervorrichtung sowie des erfindungsgemäßen Verfahrens näher erläutert, wobei in der Zeichnung
Figuren 1 und 2 schematische Draufsichten auf eine erste sowie eine zweite Ausführungsform der Kommissioniervorrichtung zeigen;
Figur 3 eine Vorderansicht des Inneren der Lagervorrichtung zeigt;
Figur 4 eine Draufsicht des Inneren der Lagervorrichtung zeigt;
Figur 5 eine Schrägansicht der Lagervorrichtung in Kombination mit der Entladeeinrichtung und der Transportvorrichtung zeigt;
Figur 6 eine Seitenansicht gemäß Figur 5 zeigt;
Figur 7 eine Vorderansicht gemäß Figur 5 zeigt;
Figur 8 den Übergangsbereich Entladeeinrichtung/Transportvorrichtung zeigt;
Figur 9 eine Schrägansicht der Kombination Entladeeinrichtung/Behälter-Sammeleinrichtung zeigt;
Figuren 10a und 10b Detailansichten der Entladeeinrichtung zeigen;
Figuren 11a - 11c Detailansichten der Kombination Entladeeinrichtung/Behälter-Sammeleinrichtung zeigen;
Figuren 12a und 12b Draufsichten auf die Entladeeinrichtung zeigen;
Figur 13a mehrere Ansichten eines Lagerbehälters mit öffenbarer Bodenfläche zeigt;
Figuren 13b und 13c schematische Ansichten des Lagerbehälters aus Figur 13a bei einem Befüll- und einem Entladevorgang zeigen;
Figuren 14a, 14b und 15a, 15b schematische Ansichten einer Schwerkraft-Entladestation in verschiedenen Stadien des Entladevorgangs zeigen;
Figur 16 eine Vorderansicht einer Abgabestation zeigt; und
Figuren 17a - 17c Seitenansichten einer Abgabestation zeigen.

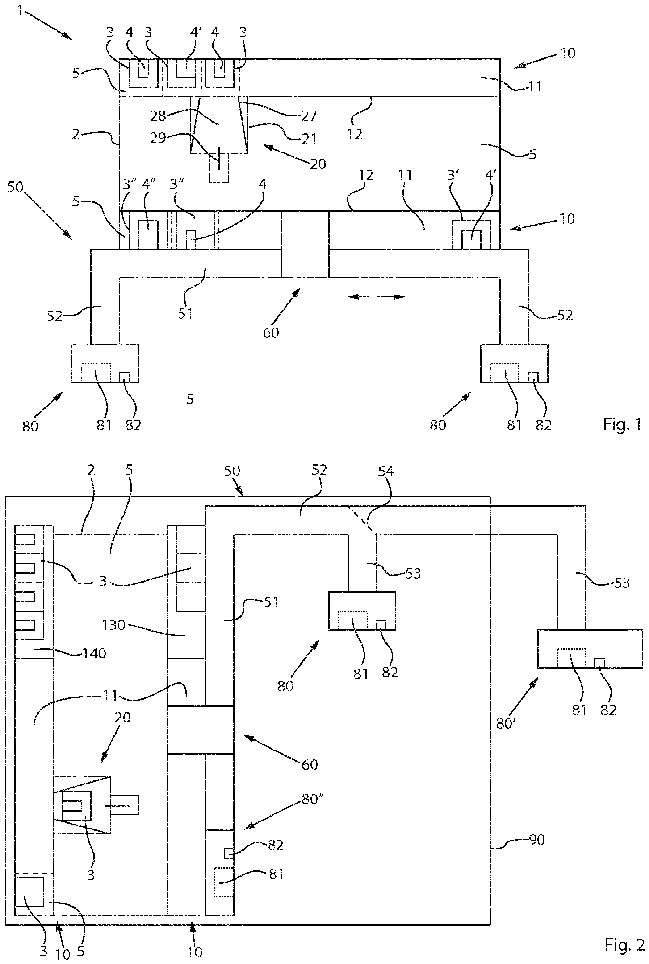

Figur 1 zeigt eine schematische Draufsicht auf eine erste Ausführungsform der erfindungsgemäßen Kommissioniervorrichtung. Die Kommissioniervorrichtung 1 umfasst eine zentrale Lagervorrichtung 2 mit zwei gegenüberliegenden Regalreihen 10, zwischen denen eine Gasse 5 ausgebildet ist, in der ein mit einer (in Figur 1 nicht dargestellten) Steuereinrichtung gekoppeltes Bediengerät 20 horizontal und vertikal verfahrbar angeordnet ist. Das Bediengerät umfasst einen Greifer 21, der um eine vertikale Drehachse drehbar ist, so dass mit einem Greifer 21 die beiden gegenüberliegenden Regalreihen 10 bedient werden können. Mit dem Greifer 21 werden Lagerbehälter 3 auf Lagerplätze bewegt und von diesen entnommen, wenn eine in einem Lagerbehälter angeordnete Arzneimittelzusammenstellung ausgebeben werden soll. Als Greifer kommt jede dem Fachmann bekannte Ausführungsform in Frage, mit welcher rechteckige Stückgüter ein- und ausgelagert werden können. Bei der gezeigten Ausführungsform wird ein Backengreifer mit Klemmbacken 27, einer Ablagefläche 28 für Lagerbehälter sowie einem Schiebemechanismus 29 verwendet. Zum Auslagern werden Lagerbehälter mit den Klemmbacken gefasst und auf die Ablagefläche gezogen, zum Bewegen von Lagerbehältern auf Lagerplätze oder auf die Behälteraufnahme (siehe nachfolgende Figuren) wird ein Lagerbehälter mit der Schiebeeinrichtung 29 entsprechend geschoben.

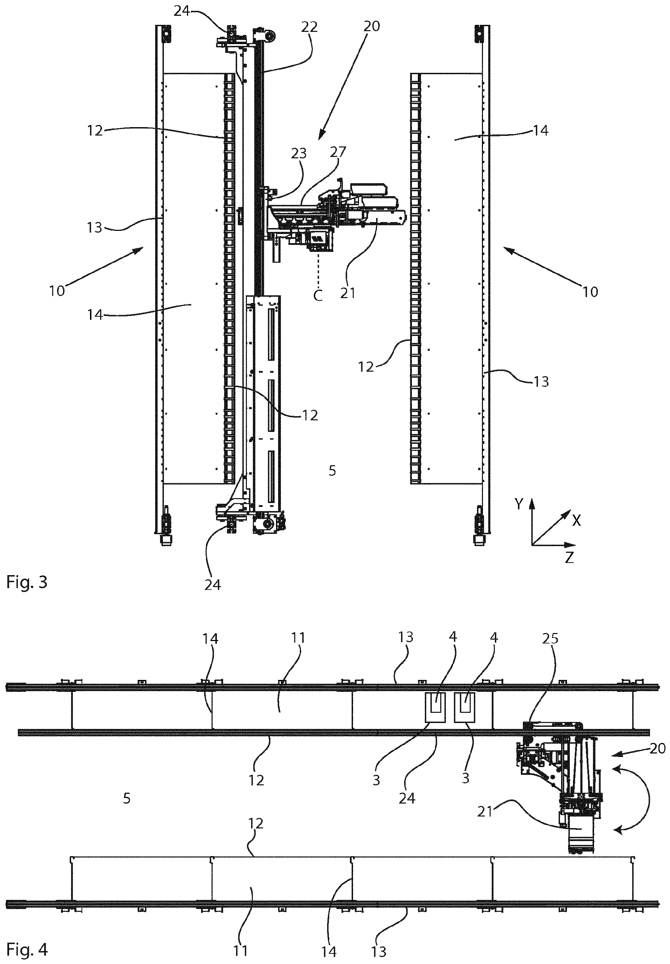

Jede Regalreihe 10 umfasst eine Mehrzahl von sich in einer Ebene erstreckenden Regalböden 11 (siehe dazu Figuren 3, 4) mit einer Mehrzahl von Lagerplätzen 5 für Lagerbehälter 3, 3', 3'' Die Lagerplätze sind auf den Regalböden nicht physikalisch voneinander getrennt, es handelt sich sozusagen um "virtuelle" Lagerplätze. Wie dies in Figur 1 ersichtlich ist, können auf den Regalreihen Lagerbehälter 3, 3', 3'' unterschiedlicher Größe gelagert werden. Welche Lagerbehälter verwendet werden, kann beispielsweise bei der Identifizierung der Arzneimittelzusammenstellung der Steuereinrichtung vorgegeben werden. Alternativ kann dies beispielsweise von dem Bediengerät ermittelt werden, wenn die Lagerbehälter von der Einlagerungseinrichtung (siehe nachfolgende Figuren) entnommen werden. Schließlich können auch spezielle Sensoren vorgesehen sein, die die Größe des Lagerbehälters bestimmen. Sofern ausschließlich Lagerbehälter einer Größe verwendet werden, sind die vorgenannten Maßnahmen überflüssig.

Bei einer alternativen Ausführungsform können die Lagerplätze an beispielsweise Rückwänden befestigten L-förmigen Streben ausgebildet sein, wobei die Lagerbehälter dann regelmäßig zwischen bzw. auf zwei Streben gelagert werden. In einem solchen Fall kann es erforderlich sein, die Streben in Abhängigkeit von der Größe der Lagerbehälter zu positionieren, d.h. dass bei Verwendung verschieden großer Lagerbehälter unterschiedlich gestaltete Lagerbereiche notwendig sind. Im Hinblick auf das Ein- oder Auslagern der Lagerbehälter ergeben sich aber keine weiteren Unterschiede.

In den Lagerbehältern 3, 3', 3'' sind Arzneimittelzusammenstellungen 4, 4', 4'' angeordnet. Bei einer Arzneimittelzusammenstellung handelt es sich um eine Zusammenstellung zumindest einer Arzneimittelportion, wobei eine Arzneimittelzusammenstellung auch mehrere Arzneimittelportionen mehrerer unterschiedlicher Arten von Arzneimitteln umfasst, die dann beispielsweise in mehreren Fläschchen angeordnet sind, die wiederum beispielsweise in einem Beutel angeordnet sind, auf welchem dann ein Identifizierer angebracht ist, mit welchem die Arzneimittelzusammenstellung eindeutig identifiziert werden kann. Unabhängig von der Form und der Verpackung der Arzneimittelzusammenstellung ist es wichtig, dass diese einen Identifizierer umfasst, anhand welchem die Steuereinrichtung jede Arzneimittelzusammenstellung identifizieren kann. In einem Lagerbehälter können auch mehrere Arzneimittelzusammenstellungen angeordnet sein. Eine Arzneimittelzusammenstellung kann einem Benutzer personenbezogen zugeordnet sein, wie es weiter unten bei der Beschreibung des erfindungsgemäßen Verfahrens näher dargelegt wird.

Die in Figur 1 gezeigte Kommissioniervorrichtung umfasst ferner eine Transporteinrichtung 50 mit einem ersten Transportmittel 51 sowie zwei zweiten Transportmitteln 52. Das erste Transportmittel 51 kann beispielsweise ein Förderband sein, das bei der gezeigten Ausführungsform parallel zu der unteren Regalreihe außerhalb des Gehäuses der Lagervorrichtung angeordnet ist. Bei seinen beiden Enden geht das Transportmittel 51 in jeweils ein zweites Transportmittel 52 über, welches ebenfalls als Förderband ausgebildet sein kann und welches wiederum mit einer Abgabestation 80 gekoppelt ist. Aufgrund der Wechselwirkung des ersten Transportmittels 51 mit den zwei zweiten Transportmitteln 52 ist das erste Transportmittel in zwei Richtungen bewegbar, wie dies durch den Pfeil angedeutet ist.

Jede Abgabestation 80 umfasst eine Entnahmestelle 81 sowie eine Benutzerschnittstelle 82, die unter Bezugnahme auf nachfolgende Figuren näher beschrieben wird.

Die Lagervorrichtung 2 ist über eine Entladeeinrichtung 60 derart mit der Transportvorrichtung 50 gekoppelt, dass mittels der Entladeeinrichtung Arzneimittelzusammenstellungen aus den Lagerbehältern an die Transportvorrichtung übergeben werden können, was unter Bezugnahme auf nachfolgende Figuren näher beschrieben wird.

Figur 2 zeigt eine zweite Ausführungsform der erfindungsgemäßen Kommissioniervorrichtung. Bei dieser Ausführungsform umfasst die Lagervorrichtung neben den oben beschriebenen Elementen eine Behälter-Bereitstelleinrichtung 130, die innerhalb einer Regalreihe ausgebildet ist und welcher entleerte Lagerbehälter 3 übergeben werden, die mittels der Behälter-Bereitstelleinrichtung derart geführt werden, dass sie von außerhalb der Lagervorrichtung entnommen werden können. Beispielsweise kann die Behälter-Bereitstelleinrichtung als eine Art Rutsche ausgebildet sein, so dass mit dem Bediengerät abgestellte entleerte Lagerbehälter schwerkraftbedingt einem Entnahmepunkt, der von außerhalb der Lagervorrichtung erreichbar ist, zugeführt werden.

Darüber hinaus umfasst die Ausführungsform gemäß Figur 2 eine Behälter-Rückgabeeinrichtung 140 für solche Arzneimittelzusammenstellungen, die innerhalb eines vorgegebenen Zeitrahmens nicht angefordert wurden. Die Behälter-Rückgabeeinrichtung kann entsprechend der Behälter-Bereitstelleinrichtung ausgebildet sein, mit dem Unterschied, dass noch mit Arzneimittelzusammenstellungen befüllte Lagerbehälter über die Behälter-Rückgabeeinrichtung zurückgegeben werden.

Die Kommissioniervorrichtung gemäß der zweiten Ausführungsform umfasst drei Abgabestationen 80, 80', 80'', wobei die Abgabestationen 80, 80'' innerhalb eines schematisch angedeuteten Gebäudes 90 angeordnet sind. Die Abgabestation 80' ist außerhalb des Gebäudes 90 angeordnet oder zumindest von außerhalb des Gebäudes erreichbar und kann beispielsweise als eine Art "Drive-Thru-Station" ausgebildet sein. Die drei Abgabestationen 80, 80', 80'' sind über die Transportvorrichtung 50 mit der Lagervorrichtung 2 derart gekoppelt, dass jeder der Abgabestationen 80, 80', 80'' Arzneimittelzusammenstellungen aus der Lagervorrichtung zugeführt werden können. Bei der gezeigten Ausführungsform ist die Abgabestation 80'' direkt an das parallel zu der Lagervorrichtung 2 ausgebildete erste Transportmittel 51 angeschlossen, wohingegen die Abgabestationen 80, 80' mittels weiterer Transportmittel 52, 53 angeschlossen sind. Um selektiv auf dem zweiten Transportmittel 52 bewegte Arzneimittelzusammenstellungen der Abgabestation 80 zuführen zu können, ist dem zweiten Transportmittel 52 ein Leitmittel 54 zugeordnet, welches in den Bewegungsweg des Transportmittels 52 bewegt wird und so die Arzneimittelzusammenstellungen auf das der Abgabestation 80 zugeordnete dritte Transportmittel 53 führt. Die Transportmittel 51, 52, 53 können beispielsweise als einfache Förderbänder ausgeführt sein, wobei das Transportmittel 51, wie dies bereits in Figur 1 angedeutet ist, in zwei Richtungen verfahrbar sein muss, um die Abgabestationen 80, 80' und 80'' erreichen zu können.

Figur 3 zeigt eine Vorderansicht des Inneren der Lagervorrichtung 2 mit zwei gegenüberliegenden Regalreihen 10 mit einer Mehrzahl von übereinander angeordneten, sich jeweils in einer Ebene erstreckenden Regalböden, die bei der gezeigten Darstellung hinter Trennwänden 14 angeordnet sind. Figur 3 ist insbesondere die Ausbildung und Anordnung des Bediengerätes 20 innerhalb einer Gasse 5 zwischen den gegenüberliegenden Regalreihen 10 zu entnehmen. Das Bediengerät 20 umfasst einen Greifer 21, welcher mittels eines Antriebes 23 an einer vertikalen Führung 22 verfahrbar ist. Die vertikale Führung 22 selbst ist an horizontalen Führungen 24 verfahrbar, so dass das Bediengerät 20 / der Greifer 21 an den Führungen 22, 24 innerhalb der Gasse 5 horizontal und vertikal verfahrbar ist. Der Greifer 21 selbst ist um eine angedeutete vertikale Drehachse C drehbar. Wie dies in Figur 3 zu erkennen ist, sind die der Gasse 5 zugewandten Vorder- oder Ladekanten 12 der Regalreihen bzw. der Regalböden parallel senkrecht zueinander ausgebildet, so dass es bei entsprechender Ausbildung des Bediengerätes nicht notwendig ist, dieses in Z-Richtung zu verfahren. Sämtliche Lagerplätze auf den Regalböden können ohne ein Verfahren des Greifers 21 in Z-Richtung erreicht werden. Die Tiefe der Lagerplätze wird über den Abstand der Vorderkante 12 der Regalböden bzw. der Regalreihen zu der Rückwand 13 definiert. Sofern es der Abstand Vorderkante/Rückwand zulässt, können auch zwei Lagerbehälter hintereinander gelagert werden, sofern man eine ggf. durchzuführende Umlagerung bei Auslagerung nur des hinteren Lagerbehälters in Kauf nimmt.

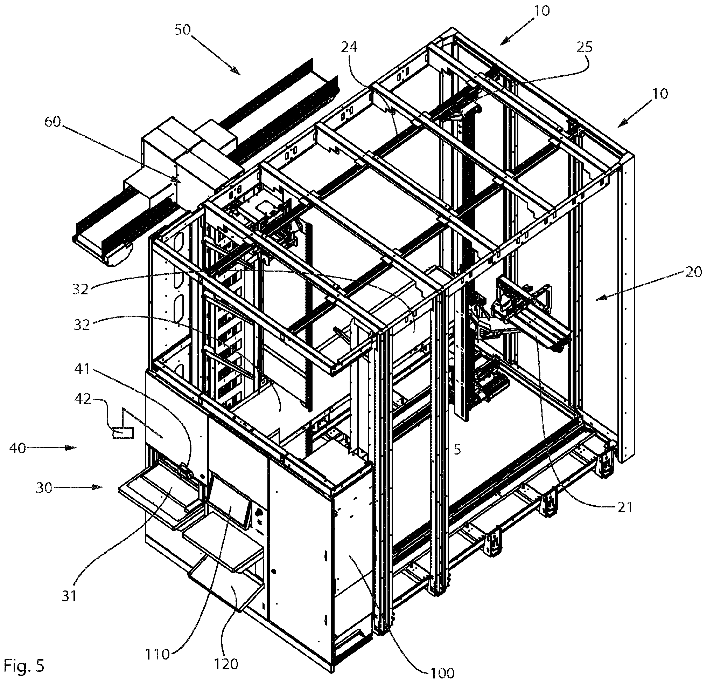

Figur 4 zeigt eine Draufsicht auf die Lagervorrichtung, wobei in der Gasse 5 das Bediengerät 20 zu erkennen ist. Bei der Draufsicht gemäß Figur 5 ist jeweils ein Regalboden 11 einer Regalreihe 10 zu erkennen, wobei jeder Regalboden durch mehrere Trennwände 14 unterteilt ist. Auf dem oberen Regalboden sind zwei Lagerbehälter 3 mit jeweils einer Arzneimittelzusammenstellung 4 angeordnet. Wie es insbesondere Figur 4 zu entnehmen ist, ist die Stirnseite des Greifers 21 an der Vorderkante 12 des Regalbodens ausgerichtet, d. h. zwischen dem Regalboden und der Ablagefläche des Greifers 21 ist lediglich ein sehr geringer Spalt vorhanden. Bei einer Drehung des Greifers um die in Figur 3 angeordnete C-Achse können auch die Lagerplätze der "unteren" Regalreihe entsprechend bedient werden.

Figur 5 zeigt eine schematische Darstellung der Kombination Lagervorrichtung/Transportvorrichtung. Bei der in Figur 5 gezeigten Darstellung ist die Lagervorrichtung 2 lediglich teilweise gezeigt, insbesondere um die innerhalb der Vorrichtung angeordneten Bauteile zu veranschaulichen. Die Lagervorrichtung 2 umfasst bei der gezeigten Ausführungsform wiederum zwei parallele Regalreihen 10, zwischen denen eine Gasse 5 ausgebildet ist. Der Übersicht halber sind die Regalböden sowie die Trennwände nicht dargestellt. Sie entsprechen den unter Bezugnahme auf die Figuren 3 und 4 beschriebenen Bauteilen. Figur 5 ist zu entnehmen, dass die Lagervorrichtung 2 eine Einlagerungseinrichtung 30 umfasst, welche an der vorderen Stirnseite der Lagervorrichtung abschnittsweise aus dieser hervorragt. Die Einlagerungseinrichtung 30 umfasst einen Ablageabschnitt 31, auf welchem mit Arzneimittelzusammenstellungen befüllte Lagerbehälter abgestellt werden können. Sobald sie auf den Ablageabschnitt abgestellt sind, werden sie mittels des in die Lagervorrichtung hineinreichenden Transportmittels 32, das üblicherweise als Förderband ausgebildet ist, in die Lagervorrichtung bewegt und können von dem Bediengerät 20 entnommen und einem Lagerplatz zugeführt werden.

Der Einlagerungseinrichtung 30 ist eine erste Identifiziereinrichtung 40 zugeordnet, mittels welcher eine Arzneimittelzusammenstellung vor dem Hineintransportieren in die Lagervorrichtung identifiziert wird. Dazu kann die erste Identifiziereinrichtung beispielsweise ein handgeführtes Identifiziermittel 42 umfassen, mit welchem Bedienpersonal die einzulagernde Arzneimittelzusammenstellung identifiziert. Nach der Identifizierung wird die Arzneimittelzusammenstellung in einem Lagerbehälter abgelegt und mittels des Transportmittels 32 in die Lagervorrichtung bewegt. Alternativ oder zusätzlich kann die erste Identifiziereinrichtung ein zweites Identifiziermittel 41 umfassen, mittels welchem eine in einem Lagerbehälter angeordnete Arzneimittelzusammenstellung automatisch identifizierbar ist.

Die Lagervorrichtung gemäß Figur 5 umfasst ferner eine Steuereinrichtung 100, welche mit der Einlagerungseinrichtung, der ersten Identifiziereinrichtung sowie dem Bediengerät gekoppelt ist und die Steuerung dieser sowie des gesamten Einund Auslagerungsprozesses vornimmt. Die Anordnung der Steuereinrichtung innerhalb der Lagervorrichtung ist nicht wesentlich. Diese kann aus wartungstechnischen Gründen auch außerhalb der Lagervorrichtung angeordnet sein; wesentlich ist lediglich eine Kopplung der Steuereinrichtung mit den vorgenannten Bauteilen.

Bei der Stirnseite der Lagervorrichtung 2 ist eine Anzeigeeinrichtung 110 angeordnet, über welche dem Bedienpersonal Informationen bezüglich der Lagervorrichtung bzw. ein- oder auszulagernder Arzneimittelzusammenstellungen angezeigt werden. Die Anzeigeeinrichtung kann auch derart ausgebildet sein, dass diese gleichzeitig als Eingabeeinrichtung ausgebildet ist, beispielsweise wenn sie als Touch-Screen ausgebildet ist.

Unterhalb der Anzeigeeinrichtung 110 ist ein Abschnitt einer Abgabeeinrichtung 120 zu erkennen. Alternativ zu einer Übergabe eines Lagerbehälters an die Entladeeinrichtung 60, was unter Bezugnahme auf nachfolgende Figuren näher beschrieben wird, kann ein mit einer Arzneimittelzusammenstellung befüllter Lagerbehälter mittels des Bediengerätes 20 an die Abgabeeinrichtung 120 übergeben werden, so dass der "Umweg" über die Entladeeinrichtung und die Transportvorrichtung entfällt. Auf diese Weise können befüllte Lagerbehälter direkt an der Stirnseite der Lagervorrichtung ausgegeben werden. Dies kann beispielsweise dann sinnvoll sein, wenn ein qualifizierter Benutzer Zugriff auf die Stirnseite der Lagervorrichtung hat.

Bei Figur 5 ist ferner im oberen Abschnitt der "linken" Regalreihe die Entladeeinrichtung 60 angeordnet, die sich von innerhalb der Lagervorrichtung nach außen erstreckt, und zwar bis über ein Transportmittel der Transportvorrichtung 50, wobei sich das Transportmittel bei der gezeigten Ausführungsform parallel zu der Lagervorrichtung erstreckt.

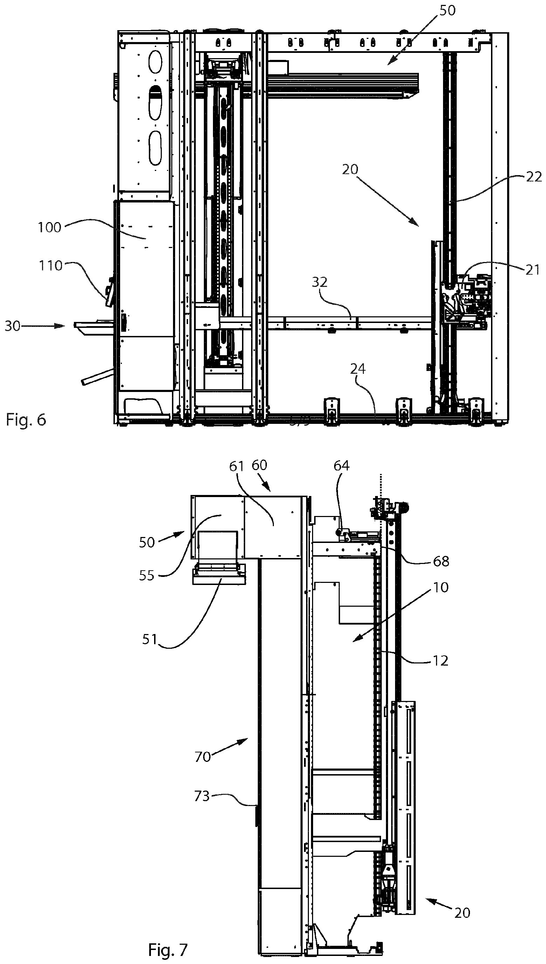

Figur 6 zeigt eine Seitenansicht gemäß Figur 5, wobei dieser Figur insbesondere zu entnehmen ist, dass sich das Transportmittel 32 der Einlagerungseinrichtung 30 durch die Lagervorrichtung 2 erstreckt. Eine entsprechende Ausgestaltung ist nicht wesentlich, erleichtert aber zum einen die Entnahme von Lagerbehältern und schafft gleichzeitig einen temporären Puffer für zwar identifizierte und in die Lagervorrichtung bewegte, aber noch nicht auf einem Lagerplatz angeordnete Lagerbehälter.

Figur 7 zeigt eine Vorderansicht des "linken" Bereiches gemäß Figur 5. Insbesondere ist in Figur 7 gezeigt, wie die Transportvorrichtung 50 im Hinblick auf die Lagervorrichtung 2 angeordnet ist. Von der Lagervorrichtung 2 ist lediglich die linke Regalreihe 10, das Bediengerät 20 sowie die Entladeeinrichtung 60 angedeutet.

Wie man dieser Figur entnehmen kann, erstreckt sich die Entladeeinrichtung 60 von innerhalb der Lagervorrichtung nach außen, und zwar derart, dass Arzneimittelzusammenstellungen an das Transportmittel 51 der Transportvorrichtung 50 übergeben werden können. Wie es Figur 7 weiter zu entnehmen ist, schließt die Vorderkante 68 der Entladestation mit der Vorderkante 12 der Regalreihe 10 ab, so dass die Entladeeinrichtung mit "üblichen" Be- und Auslagerbewegungen des Bediengerätes mit Lagerbehältern beaufschlagt werden kann. Dazu umfasst die Entladeeinrichtung 60 eine Behälteraufnahme 64, die bei der gezeigten Ausführungsform innerhalb der Entladeeinrichtung hin zu der Transportvorrichtung 50 bewegt werden kann, wobei die Endposition dieser Bewegung bei Figur 7 von der Ummantelung 61 der Entladeeinrichtung 60 verborgen ist.

Bei der gezeigten Ausführungsform ist unterhalb des äußeren Abschnittes der Entladeeinrichtung 60 eine Behälter-Sammeleinrichtung 70 mit einer Zugriffsöffnung 73 angeordnet, über welche in der Behälter-Sammeleinrichtung 70 angesammelte entleerte Lagerbehälter entnommen werden können. Die Behälter-Sammeleinrichtung wird detaillierter unter Bezugnahme auf nachfolgende Figuren beschrieben.

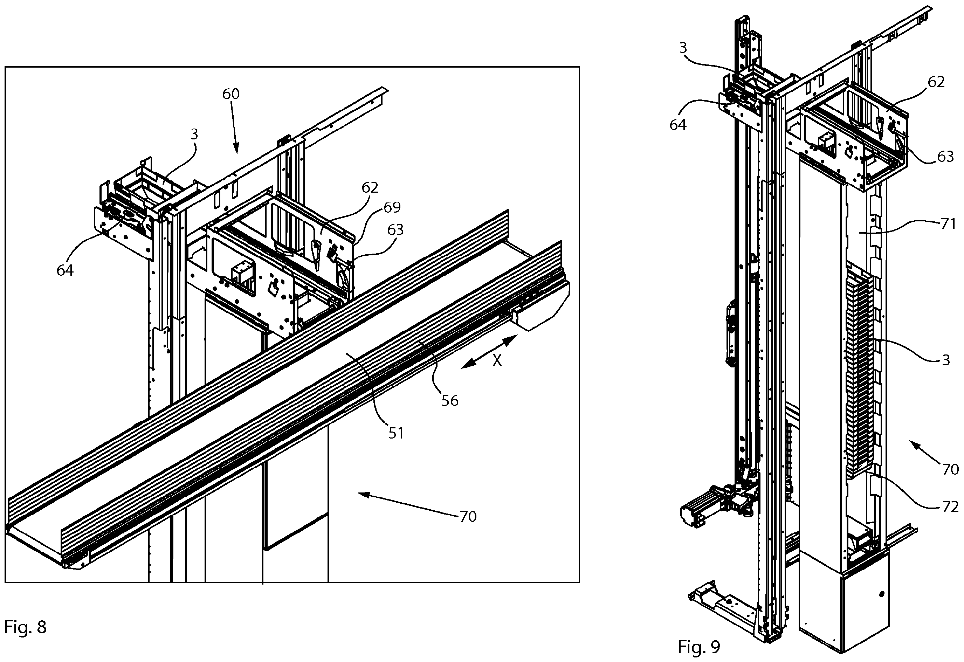

Figur 8 zeigt eine Detailansicht der Kombination Entladeeinrichtung 60 / Transporteinrichtung 50, wobei unterhalb des Abschnitts der Entladeeinrichtung, der außerhalb der Lagervorrichtung angeordnet ist, ein Abschnitt einer Behälter-Sammeleinrichtung 70 angedeutet ist. Wie Figur 8 zu entnehmen ist, ist das Transportmittel 51 der Transportvorrichtung 50 rechtwinklig zu einer Entlade-Stirnseite 69 einer Rahmenstruktur 62 der Entladeeinrichtung 60 angeordnet, wobei bei dieser Entlade-Stirnseite 69 Kipp-Aufnahmen 63 für eine in der Entladeeinrichtung 60 verfahrbare Behälteraufnahme 64 angeordnet sind. Die Behälteraufnahme 64 umfasst zwei (in dieser Figur nicht dargestellte) Kipp-Vorsprünge, die zum Kippen des Lagerbehälters bei der Stirnseite der Entladeeinrichtung mit den Kipp-Aufnahmen 63 zusammenwirken. Um zu vermeiden, dass aus Lagerbehältern auf die Transportvorrichtung 50 gekippte Arzneimittelzusammenstellungen von dem Transportmittel 51 fallen, weist die Transportvorrichtung bzw. das Transportmittel seitliche Führungen 56 auf.

In Figur 9 ist die unter dem außerhalb der Lagervorrichtung angeordneten Abschnitt der Entladeeinrichtung angeordnete Behälter-Sammeleinrichtung detaillierter dargestellt. Diese umfasst einen vertikalen langgestreckten Aufnahmeraum 71, in welchem eine Mehrzahl von Lagerbehältern 3 auf einer vertikal verfahrbaren Behälterstütze 72 angeordnet sind. Bei der gezeigten Ausführungsform werden die entleerten Lagerbehälter durch eine Öffnung im Boden der Rahmenstruktur 62 an die Behälter-Aufnahmeeinrichtung 70 übergeben, wobei der Übergabeprozess in einer nachfolgenden Figur detaillierter beschrieben ist.

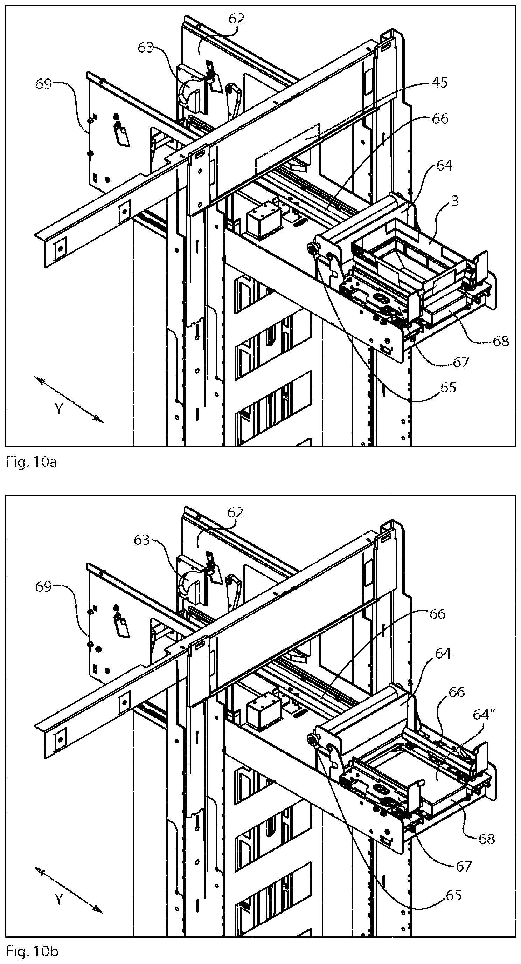

Figuren 10a und 10b zeigen Detailansichten der Entladeeinrichtung 60, wobei sich die beiden Figuren dadurch unterscheiden, dass bei Figur 10a ein Lagerbehälter 3 in der Behälteraufnahme 64 angeordnet ist. Wie dies den beiden Figuren zu entnehmen ist, ist die Behälteraufnahme 64 in Y-Richtung verfahrbar in der Entladeeinrichtung 60 angeordnet, wozu in dieser eine sich in Y-Richtung ersteckende Führung 66 ausgebildet ist.

Die in den Figuren 10a und 10b dargestellte Entladeeinrichtung ist als Kipp-Station ausgeführt. Dazu umfasst die Entladeeinrichtung bei der der (nicht dargestellten) Transportvorrichtung zugewandten Entlade-Stirnseite 69 zwei Kipp-Aufnahmen 63, in welche Kipp-Vorsprünge 65 der Behälteraufnahme 64 eingreifen. Sobald die Kipp-Vorsprünge 65 in die Kipp-Aufnahmen 63 eingreifen und die Behälteraufnahme weiter zu der Entlade-Stirnseite 69 bewegt wird, wird aufgrund der Formgebung der Kipp-Aufnahmen 63 die Kippbewegung des Aufnahmebehälters, und damit des Lagerbehälters 3, initiiert. Damit die Lagerbehälter bei Durchführen dieser Kippbewegung, und bei der Bewegung der Behälteraufnahme 64 innerhalb der Entladestation 60 als solcher, nicht verrutschen oder von der Behälteraufnahme fallen, weist diese eine Halteeinrichtung 67 auf, mit welcher die Lagerbehälter 3 temporär fixiert und beispielsweise nach Durchführen des Kipp-Vorgangs freigegeben werden können.

Bei Figur 10b ist unterhalb der Behälteraufnahme 64 eine Behälterablagefläche 64'' mit einer Stirnfläche 68 zu erkennen. Auf diese Behälterablagefläche 64'' werden Lagerbehälter 3 abgestellt, bevor sie von der Halteeinrichtung 67 der Behälteraufnahme 64 für den Transport fixiert werden. Die Stirnseite 68 der Behälterablagefläche 64'' ist, vertikal gesehen, auf einer Höhe mit den Vorderkanten 12 der Regalböden, d. h. die Behälterablagefläche 64'' ist wie ein Lagerplatz ausgebildet, so dass Lagerbehälter mit den gleichen Lagerbewegungen auf der Behälterablagefläche 64'' abgestellt werden können, mit welchen sie auch auf üblichen Lagerplätzen abgestellt werden.

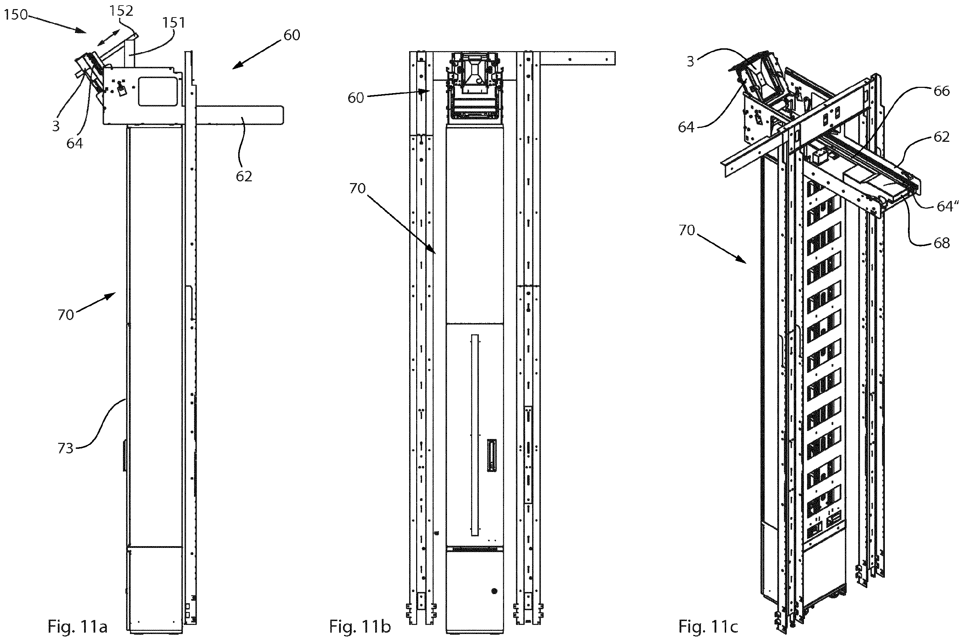

Figuren 11a - 11c zeigen verschiedene Ansichten der Kombination Entladeeinrichtung 60 / Behälter-Sammeleinrichtung 70. Auch bei diesen Figuren ist die Behälter-Sammeleinrichtung 70 unterhalb des außerhalb der Lagervorrichtung angeordneten Abschnittes der Entladeeinrichtung angeordnet, so dass Lagerbehälter 3 nach dem Entleeren einfach nach unten an die Behälter-Sammeleinrichtung übergeben werden können.

Bei den Figuren 11a - 11c ist die Behälteraufnahme 64 in ihrer Entleerungsposition dargestellt, in welche sie aus der Parkposition, die in Figur 10a dargestellt war, bewegt wird. Wie dies insbesondere bei Figur 11a ersichtlich ist, wird bei der gezeigten Ausführungsform die Behälteraufnahme durch eine Wechselwirkung der (nicht dargestellten) Kipp-Vorsprünge und Kipp-Aufnahmen derart gekippt, dass sie über die (nicht dargestellte) Transporteinrichtung ragt, so dass die in einem Lagerbehälter angeordneten Arzneimittelzusammenstellungen durch die Kippbewegung auf die Transportvorrichtung überführt werden.

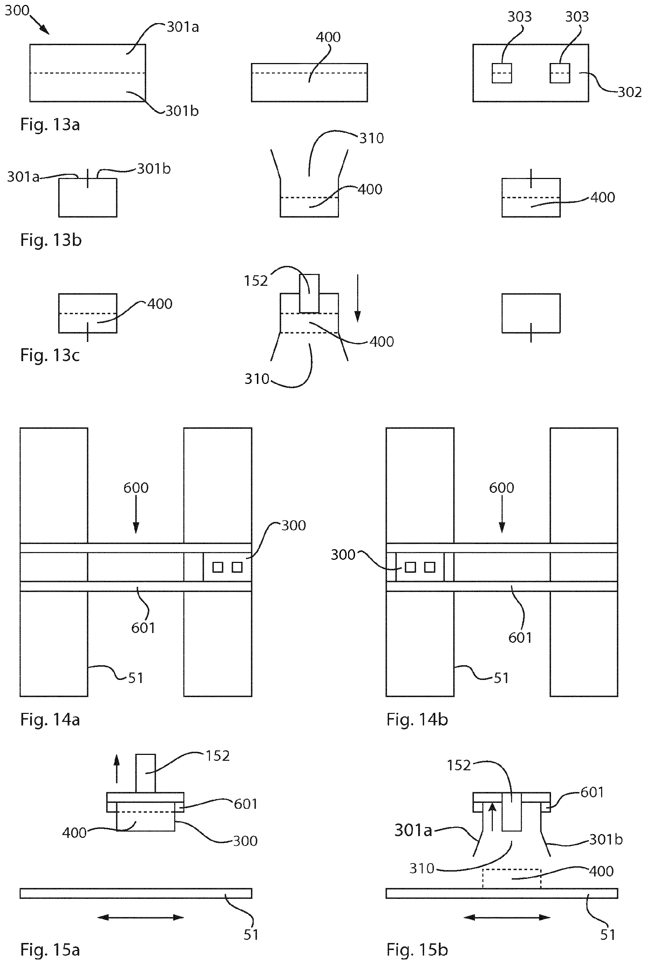

Bei der Ausführungsform nach den Figuren 11a - 11c ist der Entladestation 60 eine Ausstoßeinrichtung 150 zugeordnet. Diese umfasst ein Stoßmittel 152, mit welchem Arzneimittelzusammenstellungen über eine Öffnung in einem Lagerbehälter aus diesem ausgestoßen werden können. Für eine detaillierte Beschreibung eines mit einer Ausstoßeinrichtung 150 verwendbaren Lagerbehälters sowie des Belade- und Entladevorgangs wird auf die Figuren 13a - 15b verwiesen.

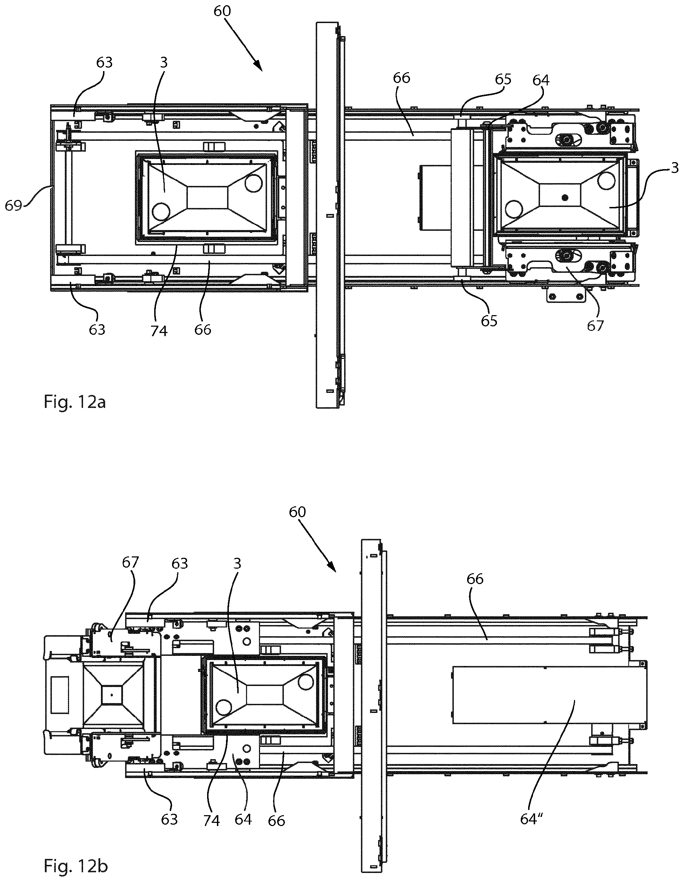

Figuren 12a und 12b zeigen Draufsichten auf die Entladeeinrichtung 60, wobei bei Figur 12a die Behälteraufnahme 64 in der Parkposition und in Figur 12b in Entleerungsposition dargestellt ist. Bei Figur 12a ist zu erkennen, dass der Lagerbehälter 3 von der Halteeinrichtung 67 der Behälteraufnahme für den Transport fixiert ist.

Wie es bei beiden Figuren zu erkennen ist, umfasst die Bodenfläche der Rahmenstruktur 62 eine Öffnung 74, und unterhalb dieser Öffnung ist die Behälter-Sammeleinrichtung angeordnet. Bei den beiden Figuren erkennt man durch die Öffnung 74 die unterhalb der Entladeeinrichtung in der Behälter-Sammeleinrichtung gelagerten Lagerbehälter 3.

Um einen entleerten Lagerbehälter nach dem Entleeren der Behälter-Sammeleinrichtung zuzuführen, wird die Behälteraufnahme auf den Führungen 66 derart über die Öffnung 74 bewegt, dass der von der Halteeinrichtung 67 gehaltene Lagerbehälter über den in der Behälter-Sammeleinrichtung angeordneten Lagerbehältern 3 bzw. der Öffnung 74 angeordnet ist. Sodann wird die Halteeinrichtung 67 geöffnet, d. h. die Fixierung des Lagerbehälters in der Behälteraufnahme gelöst, so dass die entleerten Lagerbehälter durch die Öffnung 74 auf den darunter befindlichen Stapel von bereits entleerten Lagerbehältern fallen. Auf diese Weise können die entleerten Lagerbehälter besonders einfach und rasch der Behälter-Sammeleinrichtung zugeführt werden. Alternativ ist denkbar, dass unterhalb des Abschnittes der Entladeeinrichtung, der außerhalb der Lagervorrichtung ausgebildet ist, eine Art Rutsche ausgebildet ist, welche entleerte Lagerbehälter einer anders konfigurierten Behälter-Sammeleinrichtung zuführt.

Wie bereits erwähnt, können die Lagerbehälter an die Größe der Arzneimittelzusammenstellung angepasst werden, um so die optimale Lagerkapazität der Kommissioniervorrichtung zu erreichen. In Abhängigkeit von der genauen Ausgestaltung kann es auch vorgesehen sein, dass die Lagerbehälter bezogen auf ihre Höhe nicht vollständig zylinderförmig ausgebildet sind, sondern unten eine Einschnürung aufweisen, um die Lagerbehälter besser stapeln zu können.

Figur 13a zeigt mehrere Ansichten einer speziellen Ausführungsform eines Lagerbehälters 300 mit einem öffen- und schließbaren Deckel, der durch zwei schwenkbare Deckelelemente (301a, 301b) realisiert ist (siehe linke Darstellung), welche temporär eine Entladeöffnung 310 freigeben können, durch welche Arzneimittelzusammenstellungen in den Lagerbehälter ein- und ausgelagert werden können. Die mittlere Darstellung von Figur 13a zeigt den Lagerbehälter von der Seite, aufliegend auf einer Bodenfläche und mit einer im Innenraum angedeuteten Arzneimittelzusammenstellung 400. In der rechten Darstellung ist die Bodenfläche von oben zu erkennen. Bei der gezeigten Ausführungsform umfasst diese zwei Öffnungen 303.

Die Begriffe "Deckel" und "Bodenfläche" wurden nur für die Beschreibung der speziellen Ausführungsform gewählt. Ob der Deckel beim Einlagern der Kiste unten oder oben ist, hängt davon ab, wie der Lagerbehälter auf die Einlagerungseinrichtung aufgelegt wird und wie dieser beim Auslagern entladen werden soll.

Figuren 13a und 13b zeigen schematische Ansichten des Lagerbehälters aus Figur 13a bei einem Befüll- und einem Entladevorgang, wobei jede Figur drei Ansichten/Darstellungen zeigt. Bei der linken Darstellung von Figur 13b ist der Lagerbehälter 13a von einer Stirnseite aufliegend auf der "Bodenfläche" gezeigt. Bei der mittleren Darstellung sind die Deckelelemente geöffnet, eine Arzneimittelzusammenstellung eingelegt. Bei der rechten Darstellung sind die Deckelemente wieder geschlossen.

In Abhängigkeit von der Entladeeinrichtung und der Gestaltung der Deckelelemente können solche Lagerbehälter aufliegend auf der Bodenfläche gelagert werden. Alternativ können die Lagerbehälter nach dem Befüllen gedreht werden und aufliegend auf dem Deckel eingelagert werden. Sofern auf dem Deckel aufliegend eingelagert wird, kann ganz oder teilweise auf die Bodenfläche verzichtet werden. Der Lagerbehälter ist dann wie eine Schublade mit einem freigebbaren Boden ausgebildet. Zum Einlegen einer Arzneimittelzusammenstellung wird der Lagerbehälter dann auf den verschlossenen "Deckel" gelegt und auch so eingelagert.

Zum Auslagern der Arzneimittelzusammenstellung 400 aus dem Lagerbehälter ist der Deckel nach unten ausgerichtet, wie dies in der linken Darstellung von Figur 13c schematisch wiedergegeben ist. Zum Entladen wird der "Deckel" (jetzt Boden) geöffnet. Schwerkraftbedingt fällt die Arzneimittelzusammenstellung aus dem Lagerbehälter. Ggf. kann mit einem Stößel 152, der zum Beispiel durch die Öffnungen 303 geführt wird, die Arzneimittelzusammenstellung ausgestoßen werden (sollte sich diese verklemmt haben). Nach dem Entladen werden die Deckelelemente wieder geschlossen.

Zum Öffnen/Schließen der Deckelelemente können entsprechende Mittel an dem Lagerbehälter selber vorgesehen sein; alternativ können entsprechende Mittel bei der Entladeeinrichtung vorgesehen sein.

Figuren 14a, 14a und 15a, 15b zeigen schematische Ansichten einer Ausführungsform einer Schwerkraft-Entladestation 600 in verschiedenen Stadien des Entladevorgangs. Bei Figur 14b, die die Ausführungsform schematisch von oben zeigt, ist der Lagerbehälter 300 in einer Parkposition, wie bereits unter Bezugnahme auf vorstehende Figuren beschrieben. Dort wurde der Lagerbehälter von dem Bediengerät angeordnet.

Bei Figur 14b ist der Lagerbehälter in der Entladeposition. Bei dieser Position sind die Deckelelemente nach unten ausgerichtet, wie man dies bei Figur 15a erkennt, die die Ausführungsform schematisch von vorne zeigt. Ob der Lagerbehälter in dieser Ausrichtung eingelagert war oder von der Entladestation entsprechend ausgerichtet wird ist für die Erfindung unwesentlich.

Nachdem der Lagerbehälter in die Entladeposition bewegt ist (Figur 14b/15a) werden die Deckelelemente 301a, 301b geöffnet und der oder die Stößel 152 durch (nicht dargestellte) Öffnungen bewegt, um das schwerkraftbedingte Entladen der Arzneimittelzusammenstellung zu unterstützen (sofern dies notwendig ist). Anstelle des Stößels könnte z. B. auch Druckluft verwendet werden. Die entladene Arzneimittelzusammenstellung fällt auf die Transportvorrichtung 50 und wird zu einer Abgabestation bewegt.

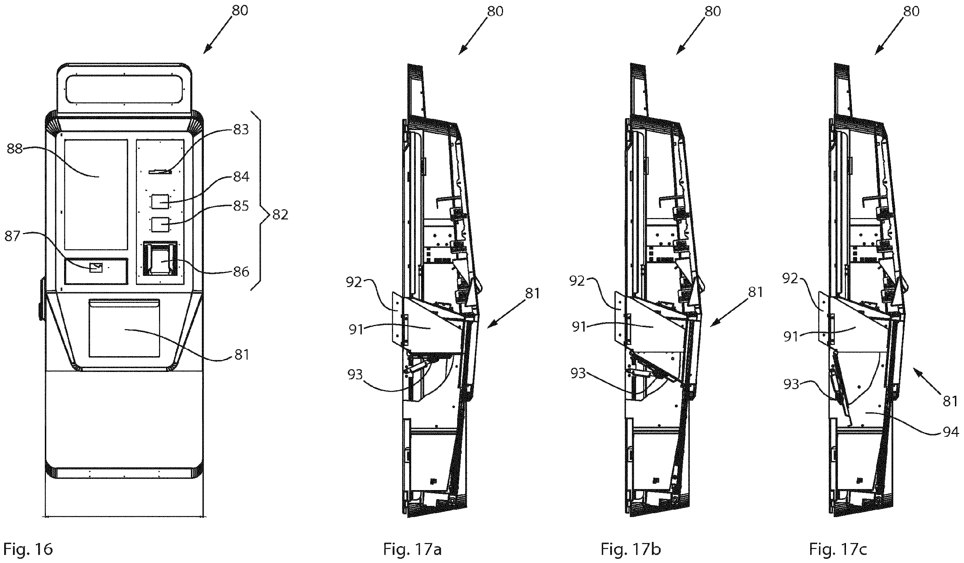

Figur 16 zeigt eine Abgabestation 80 der erfindungsgemäßen Kommissioniervorrichtung. Die Abgabestation 80 umfasst eine Entnahmestelle 81 sowie eine Benutzerschnittstelle 82 mit einer Mehrzahl von Komponenten 83 - 88, nämlich einem Belegdrucker 83, einem RFID-Lesegerät 84 (für kontaktloses Bezahlen), einem Karteneinzugsmittel 85 für eine übliche Kartenzahlung, einem PIN Pad 86 zum Eingeben einer Zahlenkombination, einem Barcode-Scanner 87 sowie einem kombinierten Eingabe-Anzeigemittel 88 (beispielsweise ein Touch-Screen). Bei alternativen Ausführungsformen können noch ein Dokumentenscanner (beispielsweise für ein Ausweisdokument) und/oder ein Rezeptscanner vorgesehen sein.

Die vorgenannte Benutzerschnittstelle 82 kann bei anderen Ausführungsformen lediglich einige der vorgenannten Komponenten umfassen, wobei die genaue Ausgestaltung einer Benutzerschnittstelle von landesspezifischen Vorgaben und dem Anwendungszweck der Abgabestation (einfacher/qualifizierter Benutzer) abhängig ist. So kann es beispielsweise erforderlich sein, dass die Benutzerschnittstelle darüber hinaus eine Bilderfassungseinrichtung (Kamera) umfasst, mit welcher ein Bild des die Arzneimittelzusammenstellung abholenden Benutzers gemacht wird. Bei anderen Ausführungsformen können beispielsweise sämtliche Komponenten zum Durchführen einer Zahlung fortgelassen werden, nämlich dann wenn Arzneimittelzusammenstellungen grundsätzlich kostenfrei zur Verfügung gestellt werden. Die vorgenannte Zusammenstellung an Komponenten der Benutzerschnittstelle ist also lediglich beispielhaft und veranschaulichend.

Die Figuren 17a - 17c zeigen Seitenschnittansichten der Abgabestation, wobei von Figur 17a zu Figur 17c der Freigabevorgang veranschaulicht ist. Die Abgabestation 80 umfasst einen Aufnahmeraum 91, der über ein Verbindungsmittel 92 mit einem (nicht dargestellten) Transportmittel der Transportvorrichtung 50 gekoppelt ist. Der Boden 93 des Aufnahmeraumes 91 ist als eine freigebbare Klappe ausgebildet. Sobald Arzneimittelzusammenstellungen über die Transportvorrichtung dem Aufnahmeraum 91 zugeführt sind, kann der Aufnahmeraum durch Verschwenken des Bodens geöffnet werden, wobei bei diesem Vorgang die in dem Aufnahmeraum angeordnete Arzneimittelzusammenstellung in einen Entnahmeraum 93 überführt wird. Ein solches Freigeben des Bodens des Aufnahmeraumes geschieht auf Anweisung der Steuereinrichtung, und zwar dann, wenn sämtliche mit dem Abgabevorgang der Arzneimittelzusammenstellung verbundenen Authentifizierungsvorgänge abgeschlossen sind (siehe nachfolgende Beschreibung des erfindungsgemäßen Verfahrens).

Die Abgabestation umfasst ferner einen (nicht dargestellten) Rückgaberaum, in welchen Arzneimittelzusammenstellungen überführt werden können, wenn der Authentifizierungsvorgang von dem Benutzer nicht erfolgreich abgeschlossen wird.

Im Nachfolgenden werden bevorzugte Ausführungsformen des erfindungsgemäßen Verfahrens zum Auslagern von in einer Kommissioniervorrichtung in Lagerbehältern angeordneten Arzneimittelzusammenstellungen beschrieben.

Bei dem erfindungsgemäßen Verfahren zum Auslagern von in Lagerbehältern angeordneten Arzneimittelzusammenstellungen wird zunächst eine auszulagernde Arzneimittelzusammenstellung identifiziert, und zwar indem ein Benutzer Kenndaten bereitstellt, die eine auszulagernde Arzneimittelzusammenstellung eindeutig identifizieren.

Für den Fall (der nachfolgend beschrieben wird), dass es sich bei dem Benutzer um einen "einfachen" Benutzer handelt, also einen Endkunden bzw. den Adressaten einer Arzneimittelzusammenstellung, können diese eine Arzneimittelzusammenstellung identifizierenden Kenndaten beispielsweise der Namen des Benutzers sein. Für weitere Ausführungen zu den Kenndaten wird auf bereits weiter oben Ausgeführtes verwiesen.

Anhand der eine Arzneimittelzusammenstellung identifizierenden Kenndaten wird der Lagerplatz des Lagerbehälters, bei welchem die identifizierte Arzneimittelzusammenstellung angeordnet ist, ermittelt.

Für den Fall, dass einem Benutzer mehrere Arzneimittelzusammenstellungen zugeordnet sind, werden diese entweder sämtlich ausgegeben, oder es wird bei einer Ausführungsform dem Benutzer die Möglichkeit gegeben, bei der Abgabestation auszuwählen, welche ihm zugeordneten Arzneimittelzusammenstellungen auszugeben sind. Bei der nachfolgenden Beschreibung wird davon ausgegangen, dass einem Benutzer lediglich eine Arzneimittelzusammenstellung zugeordnet ist.

Nachdem der Lagerplatz des Lagerbehälters innerhalb der Lagervorrichtung der Kommissioniervorrichtung ermittelt ist, wird das Bediengerät zu dem der auszulagernden Arzneimittelzusammenstellung zugeordneten Lagerplatz bewegt und der Lagerbehälter mit dem Greifer des Bediengerätes ergriffen. Bei den in den Figuren gezeigten Ausführungsformen der Kommissioniervorrichtung umfasst der Greifer schwenkbare Greifbacken 27, mit welchen ein Lagerbehälter von einem Lagerplatz auf die Ablagefläche des Greifers gezogen werden kann. Sobald ein Lagerbehälter von einem Greifer ergriffen und auf diesen überführt ist, wird das Bediengerät bzw. der Greifer des Bediengerätes zu einer Entladeeinrichtung 60 bewegt und der Lagerbehälter an eine Behälteraufnahme 64 der Entladeeinrichtung übergeben. Bei den gezeigten Ausführungsformen wird dazu der Lagerbehälter mit dem Greifer auf der Behälterablagefläche 64'' der Entladeeinrichtung 60 angeordnet und mittels der Halteeinrichtung 67 der Behälteraufnahme fixiert. Bei alternativen Ausführungsformen kann die Behälteraufnahme beispielsweise eine Mulde aufweisen, in welche der Lagerbehälter bewegt wird.

Nachdem der die auszulagernde Arzneimittelzusammenstellung umfassende Lagerbehälter an die Behälteraufnahme übergeben wurde, wird der Lagerbehälter auf die Transporteinrichtung 50 entleert, wobei dies bei der gezeigten Ausführungsformen der erfindungsgemäßen Kommissioniervorrichtung geschieht, indem die Behälteraufnahme aus einer Parkposition, in welcher der zu entleerende Lagerbehälter aufgenommen wird, in eine Entleerungsposition bewegt wird, in welcher der Lagerbehälter ausgeleert (hier gekippt) wird.

Nachdem die auszulagernde Arzneimittelzusammenstellung auf die Transportvorrichtung übergeben wurde, wird die Arzneimittelzusammenstellung mit der Transportvorrichtung zu einer Entnahmestelle einer Abgabestation transportiert. Die Entnahmestelle wird dann auf Anweisung einer mit der Abgabestation gekoppelten Steuereinrichtung freigegeben, so dass der Benutzer die Arzneimittelzusammenstellung entnehmen kann. Die Freigabe der Entnahmestelle wird von der Steuereinrichtung nur dann initiiert, wenn der Benutzer sämtliche Authentifizierungsvorgaben erfüllt hat. Diese richten sich nach nationalen Vorschriften und Anforderungen der Arzneimittelzusammenstellung als solcher. Ferner kann es in einigen Ländern vorgesehen sein, dass von dem eine Arzneimittelzusammenstellung abholenden Benutzer ein Foto gemacht wird, bevor eine Freigabe erfolgen kann. Alternativ kann es erforderlich sein, dass ein den Benutzer identifizierendes Dokument, wie beispielsweise ein Personalausweis oder ein Reisepass, eingelesen werden muss, um die Identität des Benutzers zu verifizieren. Dem Fachmann sind darüber hinaus zahlreiche weitere Möglichkeiten bekannt, die nationalen Vorgaben im Hinblick auf die Abgabe von Arzneimitteln zu ermöglichen und zu erfüllen.

Für den Fall, dass der Auslagerungsvorgang von dem Benutzer initiiert wurde, aber ein Schritt in der Authentifizierungskette fehlschlägt, beispielsweise die Bezahlung, ist es bei einer Ausführungsform vorgesehen, dass die bei der Entnahmestelle 81 angeordnete Arzneimittelzusammenstellung von der Entnahmestelle entfernt wird, um so die Abgabestation für weitere Benutzer nutzen zu können. Dazu kann es beispielsweise vorgesehen sein, die Arzneimittelzusammenstellung aus der Entnahmestelle in einen Rückgaberaum zu bewegen. Bei einer alternativen Ausführungsform kann es auch vorgesehen sein, dass der Auslagerungsprozess erst dann initiiert wird, wenn sämtliche Authentifizierungsschritte durch den Benutzer erfolgreich ausgeführt wurden. In einem solchen Fall ist es regelmäßig überflüssig, für ein Entfernen einer Arzneimittelzusammenstellung aus der Entnahmestelle Sorge zu tragen, da nur dann Arzneimittelzusammenstellungen der Entnahmestelle zugeführt werden, wenn sämtliche Authentifizierungsschritte erfolgreich durchgeführt wurden.

Ein Vorteil der erfindungsgemäßen Kommissioniervorrichtung und des Verfahrens ist es, dass die Kommissioniervorrichtung eine Mehrzahl von Abgabestationen aufweisen kann, die bei unterschiedlichen räumlichen Gegebenheiten angeordnet sein können. So ist es beispielsweise denkbar, dass die Kommissioniervorrichtung drei Abgabestationen umfasst, wobei eine von einem qualifizierten Benutzer, beispielsweise einem Apotheker, genutzt wird, und die beiden verbleibenden Abgabestationen von einfachen Benutzern, wobei eine der beiden Abgabestationen innerhalb der Räumlichkeiten einer Apotheke, und die verbleibende Abgabestation außerhalb der Räumlichkeiten, in denen die Lagervorrichtung der Kommissioniervorrichtung angeordnet ist, positioniert ist. Eine solche außerhalb der Räumlichkeiten der Lagervorrichtung angeordnete Abgabestation kann beispielsweise in Form einer Drive-Thru-Station ausgebildet sein.

Die auf die Transporteinrichtung entleerten Lagerbehälter werden bei einer Ausführungsform des erfindungsgemäßen Verfahrens einer Behälter-Sammeleinrichtung zugeführt, die beispielsweise unterhalb der Entladeeinrichtung ausgebildet sein kann. Dazu kann beispielsweise die Halteeinrichtung der Behälteraufnahme gelöst werden, wodurch der Lagerbehälter schwerkraftbedingt durch eine Öffnung in einer Bodenfläche der Entladestation in einen Lagerraum der Behälter-Sammeleinrichtung fallen kann. Alternativ kann der Entladeeinrichtung eine Rutsche zugeordnet sein, mit welcher die entleerten Lagerbehälter entweder der Behälter-Sammeleinrichtung oder einer Behälter-Bereitstelleinrichtung zugeführt werden. Alternativ können die entleerten Lagerbehälter nach dem Entleeren wieder in die Parkposition bewegt werden, von dem Bediengerät ergriffen werden und entweder der Behälter-Bereitstelleinrichtung zugeführt werden, oder einfach auf einen leeren Lagerplatz bewegt werden. Welche der vorgenannten Optionen durchgeführt wird, hängt davon ab, wie hoch die Auslagerungsanforderungen sind.

## Patentansprüche

1. Kommissioniervorrichtung (1) zum Ausgeben von in Lagerbehältern (3, 3', 3'') angeordneten Arzneimittelzusammenstellungen (4, 4', 4''), aufweisend
zumindest eine Lagervorrichtung (2) mit
einer Mehrzahl von Lagerplätzen (5) für Lagerbehälter,
einem vor der Regalreihe (10) horizontal und vertikal verfahrbaren und mit einer Steuereinrichtung (100) gekoppelten Bediengerät (20),
zumindest einer Einlagerungseinrichtung (30), mit welcher Lagerbehälter (3, 3', 3'') für Arzneimittelzusammenstellungen (4, 4', 4'') in die Lagervorrichtung (2) bewegt werden und von welcher das Bediengerät (20) Lagerbehälter (3, 3', 3'') entnehmen kann,
zumindest eine erste Identifiziereinrichtung (40) zum Identifizieren von Arzneimittelzusammenstellungen,
einer Entladeeinrichtung (60), mit welcher in einem Lagerbehälter (3, 3', 3'') angeordnete Arzneimittelzusammenstellungen (4, 4', 4'') an eine Transportvorrichtung (50) übergeben werden,
zumindest eine mit der Steuereinrichtung (100) gekoppelte Abgabestation (80, 80', 80'') mit
einer Entnahmestelle (81) und
einer Benutzerschnittstelle (82), sowie
eine mit der Steuereinrichtung (100) gekoppelte Transportvorrichtung (50), welcher Arzneimittelzusammenstellungen (4, 4', 4'') von der Entladevorrichtung (60) übergeben werden und welche die Lagervorrichtung (2) mit jeder Abgabestation (80, 80', 80'') verbindet und derart ausgebildet ist, dass jeder Abgabestation Arzneimittelzusammenstellungen zugeführt werden können.

2. Kommissioniervorrichtung (1) zum Ausgeben von in Lagerbehältern (3, 3', 3'') angeordneten Arzneimittelzusammenstellungen (4, 4', 4'') nach Anspruch 1,
**dadurch gekennzeichnet, dass** die Entladeeinrichtung (60) eine Behälteraufnahme (64, 68) aufweist, welche entsprechend einem Lagerplatz ausgebildet ist, so dass von dem Bediengerät (20) mit üblichen Lagerbewegungen Lagerbehälter in der Behälteraufnahme ablegbar sind.

3. Kommissioniervorrichtung (1) zum Ausgeben von in Lagerbehältern (3, 3', 3'') angeordneten Arzneimittelzusammenstellungen (4, 4', 4'') nach Anspruch 1 oder 2,
**dadurch gekennzeichnet, dass** die Entladestation (60) als eine Schwerkraft-Entladestation ausgeführt ist, mit welcher in Lagerbehältern (3, 3', 3'') angeordnete Arzneimittelzusammenstellungen (4, 4', 4'') bei einer Aufnahmestelle über eine Entladeöffnung (310) eines Lagerbehälters auf die Transportvorrichtung übergeben werden.

4. Kommissioniervorrichtung (1) zum Ausgeben von in Lagerbehältern (3, 3', 3'') angeordneten Arzneimittelzusammenstellungen (4, 4', 4'') nach Anspruch 3,
**dadurch gekennzeichnet, dass** die Entladeeinrichtung (60) als eine Kippstation ausgeführt ist, mit welcher in Lagerbehältern (3, 3', 3'') angeordnete Arzneimittelzusammenstellungen (4, 4', 4'') bei einer Aufnahmestelle über die Entladeöffnung (310) eines Lagerbehälters auf die Transportvorrichtung gekippt werden.

5. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 3,
**dadurch gekennzeichnet, dass** die Entladevorrichtung (60) eine Ausstoßeinrichtung (150) umfasst, mit welcher in Lagerbehältern (3, 3', 3'') angeordnete Arzneimittelzusammenstellungen (4, 4', 4'') bei einer Aufnahmestelle über die Entladeöffnung (310) eines Lagerbehälters auf die Transportvorrichtung gestoßen werden.

6. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 5,
**dadurch gekennzeichnet, dass** die Entladeeinrichtung (60) eine verfahrbare Behälteraufnahme (64) aufweist, welche zu entleerende Lagerbehälter (3, 3', 3'') in einer Parkposition aufnimmt und zu einer Entleerungsposition bewegt.

7. Kommissioniervorrichtung (1) zum Ausgeben von in Lagerbehältern (3, 3', 3'') angeordneten Arzneimittelzusammenstellungen (4, 4', 4'') nach Anspruch 6, **dadurch gekennzeichnet, dass** die Behälteraufnahme (64) eine Halteeinrichtung (67) aufweist, mit welcher Lagerbehälter (3, 3', 3'') temporär und lösbar gehalten werden können.

8. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 7,
**dadurch gekennzeichnet, dass** der Entladeeinrichtung (60) eine Behälter-Sammeleinrichtung (70) zugeordnet ist, welche bei der Entladeeinrichtung (60) entleerte Lagerbehälter (3, 3', 3'') aufnimmt.

9. Kommissioniervorrichtung (1) zum Ausgeben von in Lagerbehältern (3, 3', 3'') angeordneten Arzneimittelzusammenstellungen (4, 4', 4'') nach Anspruch 8,
**dadurch gekennzeichnet, dass** die Behälter-Sammeleinrichtung (70) derart unterhalb der Entladeeinrichtung (60) angeordnet ist, dass entleerte Lagerbehälter durch Lösen der Halteeinrichtung (67) der Behälter-Sammeleinrichtung (70) zuführbar sind.

10. Kommissioniervorrichtung (1) zum Ausgeben von in Lagerbehältern (3, 3', 3'') angeordneten Arzneimittelzusammenstellungen (4, 4', 4'') nach Anspruch 8 oder 9,
**dadurch gekennzeichnet, dass** die Behälter-Sammeleinrichtung (70) eine von außerhalb der Lagervorrichtung (2) erreichbare Zugriffsöffnung (73) aufweist, über welche gesammelte Lagerbehälter entnehmbar sind.

11. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 10,
**dadurch gekennzeichnet, dass** die Lagervorrichtung (2) zumindest eine abschnittsweise im Aktionsradius des Bediengeräts (20) angeordnete und von außerhalb der Lagervorrichtung erreichbare Abgabeeinrichtung (120) aufweist.

12. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 11,
**dadurch gekennzeichnet, dass** die Kommissioniervorrichtung (1) eine von außerhalb der Lagervorrichtung erreichbare Behälter-Bereitstelleinrichtung (130) für entleerte Lagerbehälter aufweist.

13. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 12,
**dadurch gekennzeichnet, dass** die Kommissioniervorrichtung zumindest zwei Abgabestationen (80', 80'') aufweist, die für unterschiedliche Zugriffsarten unterschiedlicher Benutzer ausgebildet sind.

14. Kommissioniervorrichtung (1) zum Ausgeben von in Lagerbehältern (3, 3', 3'') angeordneten Arzneimittelzusammenstellungen (4, 4', 4'') nach Anspruch 13,
**dadurch gekennzeichnet, dass** eine der Abgabestationen (80'') von außerhalb eines Gebäudes (90), in welchem die Lagervorrichtung (2) angeordnet ist, bedienbar ist.

15. Kommissioniervorrichtung (1) zum Ausgeben von in Lagerbehältern (3, 3', 3'') angeordneten Arzneimittelzusammenstellungen (4, 4', 4'') nach einem der Ansprüche 1 - 14,
**dadurch gekennzeichnet, dass** die Kommissioniervorrichtung (1) eine zweite Identifiziereinrichtung (45) aufweist, mit welcher Arzneimittelzusammenstellungen (4, 4', 4'') vor einem Entleeren der Lagerbehälter in der Entladeeinrichtung (60) identifiziert werden.

16. Verfahren zum Auslagern von in einer Kommissioniervorrichtung (1) in Lagerbehältern (3, 3', 3'') angeordneten Arzneimittelzusammenstellungen (4, 4', 4''), wobei
a) eine auszulagernde Arzneimittelzusammenstellung (4, 4', 4'') identifiziert wird, indem ein Benutzer eine auszulagernde Arzneimittelzusammenstellung eindeutig identifizierende Kenndaten bereitstellt und der Lagerplatz innerhalb der Kommissioniervorrichtung (1) ermittelt wird,
b) ein Bediengerät (20) zu einem der auszulagernden Arzneimittelzusammenstellung (4, 4', 4'') zugeordneten Lagerplatz bewegt wird,
c) mit dem Bediengerät (20) ein bei dem Lagerplatz angeordneter, die Arzneimittelzusammenstellung (4, 4', 4'') umfassender Lagerbehälter (3, 3', 3'') ergriffen und an eine Behälteraufnahme (64) einer Entladeeinrichtung (60) übergeben wird,
d) der an die Behälteraufnahme (64) übergebene Lagerbehälter (3, 3', 3'') auf die Transportvorrichtung (50) entleert wird,
e) die Arzneimittelzusammenstellung (4, 4', 4'') mit der Transportvorrichtung (50) zu einer Entnahmestelle (81) einer Abgabestation (80, 80', 80'') transportiert wird, und
f) die Entnahmestelle (81) auf Anweisung einer mit der Abgabestation gekoppelten Steuereinrichtung (100) zur Entnahme der Arzneimittelzusammenstellung (4, 4', 4'') freigegeben wird.

17. Verfahren zum Auslagern von in einer Kommissioniervorrichtung (1) in Lagerbehältern (3, 3', 3'') angeordneten Arzneimittelzusammenstellungen (4, 4', 4'') nach Anspruch 16,
**dadurch gekennzeichnet, dass** die Behälteraufnahme (64) vor der Übergabe des Lagerbehälters derart angeordnet wird, dass das Bediengerät (20) den Lagerbehälter mit üblichen Lagerbewegungen übergeben kann.

18. Verfahren zum Auslagern von in einer Kommissioniervorrichtung (1) in Lagerbehältern (3, 3', 3'') angeordneten Arzneimittelzusammenstellungen (4, 4', 4'') nach Anspruch 16 oder 17,
**dadurch gekennzeichnet, dass** der Lagerbehälter (3, 3', 3'') entleert wird, indem die Behälteraufnahme (64) gekippt wird, so dass Arzneimittelzusammenstellungen (4, 4', 4'') auf die Transportvorrichtung (50) fallen.

19. Verfahren zum Auslagern von in einer Kommissioniervorrichtung (1) in Lagerbehältern (3, 3', 3'') angeordneten Arzneimittelzusammenstellungen (4, 4', 4'') nach einem der Ansprüche 16 - 18,
**dadurch gekennzeichnet, dass** die Behälteraufnahme (64) vor dem Entleeren des Lagerbehälters (3, 3', 3'') aus einer Parkposition in eine Entleerungsposition bewegt wird.

20. Verfahren zum Auslagern von in einer Kommissioniervorrichtung (1) in Lagerbehältern (3, 3', 3'') angeordneten Arzneimittelzusammenstellungen (4, 4', 4'') nach einem der Ansprüche 16 - 19,
**dadurch gekennzeichnet, dass** der Lagerbehälter (3, 3', 3'') nach dem Entleeren in eine Behälter-Sammeleinrichtung (70) oder eine Behälter-Bereitstelleinrichtung (130) bewegt wird.

21. Verfahren zum Auslagern von in einer Kommissioniervorrichtung (1) in Lagerbehältern (3, 3', 3'') angeordneten Arzneimittelzusammenstellungen (4, 4', 4'') nach einem der Ansprüche 16 - 20,
**dadurch gekennzeichnet, dass** eine auszulagernde Arzneimittelzusammenstellung (4, 4', 4'') identifiziert wird, indem als Kenndaten Personendaten eines Benutzers bereitgestellt und ausgewertet werden.

22. Verfahren zum Auslagern von in einer Kommissioniervorrichtung (1) in Lagerbehältern (3, 3', 3'') angeordneten Arzneimittelzusammenstellungen (4, 4', 4'') nach Anspruch 21,
**dadurch gekennzeichnet, dass**, sofern einem Benutzer mehrere Arzneimittelzusammenstellungen zugeordnet sind, dem Benutzer die Möglichkeit gegeben wird, die auszugebenden Arzneimittelzusammenstellungen auszuwählen.

23. Verfahren zum Auslagern von in einer Kommissioniervorrichtung (1) in Lagerbehältern (3, 3', 3'') angeordneten Arzneimittelzusammenstellungen (4, 4', 4'') nach einem der Ansprüche 16 - 22,
**dadurch gekennzeichnet, dass** die Schritt a) nachfolgenden Schritte des Verfahrens zum Auslagern nur dann ausgeführt werden, wenn sämtliche mit dem Auslagern verbundenen Benutzerhandlungen erfolgreich ausgeführt wurden.

24. Verfahren zum Auslagern von in einer Kommissioniervorrichtung (1) in Lagerbehältern (3, 3', 3'') angeordneten Arzneimittelzusammenstellungen (4, 4', 4'') nach einem der Ansprüche 16 - 23,
**dadurch gekennzeichnet, dass** eine in einem Lagerbehälter (3, 3', 3'') angeordnete Arzneimittelzusammenstellung (4, 4', 4'') vor dem Entleeren des Lagerbehälters mit der zweiten Identifiziereinrichtung identifiziert und der Lagerbehälter nur dann auf die Transporteinrichtung entleert wird, wenn die identifizierte Arzneimittelzusammenstellung (4, 4', 4'') der anhand der Kenndaten identifizierten Arzneimittelzusammenstellung (4, 4', 4'') entspricht.

25. Verfahren zum Auslagern von in einer Kommissioniervorrichtung (1) in Lagerbehältern (3, 3', 3'') angeordneten Arzneimittelzusammenstellungen (4, 4', 4'') nach Anspruch 24,
**dadurch gekennzeichnet, dass** dann, wenn die identifizierte Arzneimittelzusammenstellung (4, 4', 4'') nicht der anhand der Kenndaten identifizierten Arzneimittelzusammenstellung (4, 4', 4'') entspricht, diese aus der Lagervorrichtung ausgelagert wird.

## Claims

1. Picking device (1) for retrieving drug compositions (4, 4', 4'') from storage that are arranged in storage containers (3, 3', 3''), comprising
at least one storage device (2) with
a plurality of storage spaces (5) for storage containers,
an operator device (20) that can be moved horizontally and vertically in front of the row of shelves (10) and coupled to a control device (100),
at least one storage-facilitating device (30), via which storage containers (3, 3', 3'') for drug compositions (4, 4', 4'') are moved into the storage device (2) and from which the operator device (20) can remove storage containers (3, 3', 3''),
at least one first identification device (40) for the identification of drug compositions,
an unloading device (60), via which drug compositions (4, 4', 4'') arranged in a storage container (3, 3', 3'') are transferred to a transport device (50),
at least one delivery station (80, 80', 80'') coupled to the control device (100) with
an extraction point (81), and
a user interface (82), as well as a transport device (50) coupled to the control device (100), to which drug compositions (4, 4', 4'') are transferred from the unloading device (60) and which connects the storage device (2) to each delivery station (80, 80', 80'') and is designed in such a way that drug compositions can be supplied to each delivery station.

2. Picking device (1) for retrieving drug compositions (4, 4', 4'') from storage that are arranged in storage containers (3, 3', 3'') according to Claim 1,
**characterized in that** the unloading device (60) comprises a container receptacle (64, 68), which is designed in accordance with a storage space so that storage containers can be placed in the container receptacles by the operator device (20) with usual stock movements.

3. Picking device (1) for retrieving drug compositions (4, 4', 4'') from storage that are arranged in storage containers (3, 3', 3'') according to Claim 1 or 2,
**characterized in that** the unloading station (60) is designed as a gravity unloading station, via which drug compositions (4, 4', 4'') arranged in storage containers (3, 3', 3'') are transferred onto the transport device at a receiving point via an unloading opening (310) of a storage container.

4. Picking device (1) for retrieving drug compositions (4, 4', 4'') from storage that are arranged in storage containers (3, 3', 3'') according to Claim 3,
**characterized in that** the unloading device (60) is designed as a tipping station, via which drug compositions (4, 4', 4'') arranged in storage containers (3, 3', 3'') are tilted onto the transport device at a receiving point via the unloading opening (310) of a storage container.

5. Picking device (1) for retrieving drug compositions (4, 4', 4'') from storage that are arranged in storage containers (3, 3', 3'') according to one of the Claims 1 - 3,
**characterized in that** the unloading device (60) comprises an ejection device (150), via which drug compositions (4, 4', 4'') arranged in storage containers (3, 3', 3'') are pushed onto the transport device at a receiving point via the unloading opening (310) of a storage container.

6. Picking device (1) for retrieving drug compositions (4, 4', 4'') from storage that are arranged in storage containers (3, 3', 3'') according to one of the Claims 1 - 5,
**characterized in that** the unloading device (60) comprises a moveable container receptacle (64), which picks up storage containers to be emptied (3, 3', 3'') at a park position and moves them to an emptying position.

7. Picking device (1) for retrieving drug compositions (4, 4', 4'') from storage that are arranged in storage containers (3, 3', 3'') according to Claim 6,
**characterized in that** the container receptacle (64) comprises a holding device (67), via which storage containers (3, 3', 3'') can be held temporarily in a detachable manner.

8. Picking device (1) for retrieving drug compositions (4, 4', 4'') from storage that are arranged in storage containers (3, 3', 3'') according to any one of the Claims 1 - 7,
**characterized in that** a container collection device (70) is assigned to the unloading device (60), which container collection device (70) holds emptied storage containers (3, 3', 3'') at the unloading device (60).

9. Picking device (1) for retrieving drug compositions (4, 4', 4'') from storage that are arranged in storage containers (3, 3', 3'') according to Claim 8,
**characterized in that** the container collection device (70) is arranged below the unloading device (60) in such a way that emptied storage containers can be supplied by releasing the holding device (67) of the container collection device (70).

10. Picking device (1) for retrieving drug compositions (4, 4', 4'') from storage that are arranged in storage containers (3, 3', 3'') according to Claim 8 or 9,
**characterized in that** the container collection device (70) comprises an access opening (73) accessible from outside the storage device (2), via which collected storage containers can be removed.

11. Picking device (1) for retrieving drug compositions (4, 4', 4'') from storage that are arranged in storage containers (3, 3', 3'') according to one of the Claims 1 - 10,
**characterized in that** the storage device (2) comprises at least one delivery device arranged in sections within the radius of action of the operator device (20) and accessible from outside the storage device (120).

12. Picking device (1) for retrieving drug compositions (4, 4', 4'') from storage that are arranged in storage containers (3, 3', 3'') according to one of the Claims 1 - 11,
**characterized in that** the picking device (1) comprises a container provisioning device (130) for emptied storage containers accessible from outside the storage device.

13. Picking device (1) for retrieving drug compositions (4, 4', 4'') from storage that are arranged in storage containers (3, 3', 3'') according to any one of the Claims 1 - 12,
**characterized in that** the picking device comprises at least two delivery stations (80', 80'') which are designed for different types of access of various users.

14. Picking device (1) for retrieving drug compositions (4, 4', 4'') from storage that are arranged in storage containers (3, 3', 3'') according to Claim 13,
**characterized in that** one of the delivery stations (80'') can be operated from outside a building (90) in which the storage device (2) is arranged.

15. Picking device (1) for retrieving drug compositions (4, 4', 4'') from storage that are arranged in storage containers (3, 3', 3'') according to any one of the Claims 1 - 14,
**characterized in that** the picking device (1) comprises a second identification device (45), via which drug compositions (4, 4', 4'') are identified before emptying the storage containers in the unloading device (60) .

16. Method for retrieving drug compositions (4, 4', 4'') from storage that are arranged in a picking device (1) in storage containers (3, 3', 3''), wherein
a) a drug composition to be retrieved (4, 4', 4'') is identified by a user providing identification data that uniquely identifies the drug composition to be retrieved from storage and by determining the storage location within the picking device (1);
b) an operator device (20) is moved to a storage location assigned to the drug composition (4, 4', 4'') to be retrieved from storage;
c) via the operator device (20), a storage containers (3, 3', 3'') arranged at the storage space comprising the drug composition (4, 4', 4'') is gripped and transferred to a container receptacle (64) of a unloading device (60),
d) the storage container (3, 3', 3'') transferred to the container receptacle (64) is emptied onto the transport device (50);
e) the drug composition (4, 4', 4'') is transported by the transport device (50) to an extraction point (81) of a delivery station (80, 80', 80''), and
f) the extraction point (81) is released upon the order issued by a control device coupled to the delivery station (100) for the extraction of the drug composition (4, 4', 4'').

17. Method for retrieving drug compositions (4, 4', 4'') from storage that are arranged in a picking device (1) in storage containers (3, 3', 3''), according to Claim 16,
**characterized in that**, before transferring the storage container, the container receptacle (64) is arranged in such a way that the operator device (20) can transfer the storage container with usual stock movements.

18. Method for retrieving drug compositions (4, 4', 4'') from storage that are arranged in a picking device (1) in storage containers (3, 3', 3'') according to Claim 16 or 17,
**characterized in that** the storage container (3, 3', 3'') is emptied by tilting the container receptacle (64) so that drug compositions (4, 4', 4'') fall onto the transport device (50).

19. Method for retrieving drug compositions (4, 4', 4'') from storage that are arranged in a picking device (1) in storage containers (3, 3', 3''), according to any one of the Claims 16 - 18,
**characterized in that**, before emptying the storage container (3, 3', 3''), the container receptacle (64) is moved from a park position to an emptying position.

20. Method for retrieving drug compositions (4, 4', 4'') from storage that are arranged in a picking device (1) in storage containers (3, 3', 3'') according to any one of the Claims 16 - 19,
**characterized in that**, after emptying, the storage container (3, 3', 3'') is moved into a container collection device (70) or a container provisioning device (130).

21. Method for retrieving drug compositions (4, 4', 4'') from storage that are arranged in a picking device (1) in storage containers (3, 3', 3'') according to any one of the Claims 16 - 20,
**characterized in that** a drug composition (4, 4', 4'') to be retrieved from storage is identified by providing and evaluating personal data of a user as identification data.

22. Method for retrieving drug compositions (4, 4', 4'') from storage that are arranged in a picking device (1) in storage containers (3, 3', 3''), according to Claim 21,
**characterized in that**, if a plurality of drug compositions are assigned to a user, the user is given the opportunity to select the drug compositions to be output.

23. Method for retrieving drug compositions (4, 4', 4'') from storage that are arranged in a picking device (1) in storage containers (3, 3', 3'') according to any one of the Claims 16 - 22,
**characterized in that** the steps of the method for retrieval from storage subsequent to step a)
are performed only if all user actions associated with the retrieval from storage have been successfully performed.

24. Method for retrieving drug compositions (4, 4', 4'') from storage that are arranged in a picking device (1) in storage containers (3, 3', 3'') according to any one of the Claims 16 - 23,
**characterized in that** a drug composition (4, 4', 4'') arranged in a storage container (3, 3', 3'') is identified with the second identification device before emptying the storage container and the storage container is emptied onto the transport device only if the identified drug composition (4, 4', 4'') corresponds to the drug composition identified on the basis of the identification data (4, 4', 4'').

25. Method for retrieving drug compositions (4, 4', 4'') from storage that are arranged in a picking device (1) in storage containers (3, 3', 3''), according to Claim 24
**characterized in that**, if the identified drug composition (4, 4', 4'') does not correspond to the drug composition identified on the basis of the identification data (4, 4', 4''), it is released from the storage device.

## Revendications

1. Dispositif de préparation de commandes (1) pour la distribution de compositions médicamenteuses (4, 4', 4'') disposées dans des récipients de stockage (3, 3', 3''), présentant
au moins un dispositif de stockage (2) comportant
une pluralité d'emplacements de stockage (5) pour des récipients de stockage,
une unité de commande (20) déplaçable horizontalement et verticalement devant la rangée de rayonnages (10) et couplée à un dispositif de commande (100),
au moins un dispositif de mise en stock (30), à l'aide duquel des récipients de stockage (3, 3', 3'') pour des compositions médicamenteuses (4, 4', 4'') sont déplacés dans le dispositif de stockage (2) et dans lequel l'unité de commande (20) peut prélever des récipients de stockage (3, 3', 3''),
au moins un premier dispositif d'identification (40) pour identifier des compositions médicamenteuses,
un dispositif de déchargement (60) à l'aide duquel les compositions médicamenteuses (4, 4', 4'') disposées dans un récipient de stockage (3, 3', 3'') sont transférées à un dispositif de transport (50),
au moins une station de distribution (80, 80', 80'') couplée au dispositif de commande (100) et comportant
un point de prélèvement (81) et
une interface d'utilisateur (82), ainsi qu'un dispositif de transport (50) couplé au dispositif de commande (100) auquel des compositions médicamenteuses (4, 4', 4'') sont transférées par le dispositif de déchargement (60) et qui connecte le dispositif de stockage (2) à chaque station de distribution (80, 80', 80'') et est réalisé de manière à ce que des compositions médicamenteuses puissent être acheminées vers chaque station de distribution.

2. Dispositif de préparation de commandes (1) pour la distribution de compositions médicamenteuses (4, 4', 4'') disposées dans des récipients de stockage (3, 3', 3'') selon la revendication 1,
**caractérisé en ce que** le dispositif de déchargement (60) présente un support de récipient (64, 68) qui est réalisé en fonction d'un emplacement de stockage de manière à ce que des récipients de stockage puissent être déposés dans le support de récipient par l'unité de commande (20) par des mouvements de stockage usuels.

3. Dispositif de préparation de commandes (1) pour la distribution de compositions médicamenteuses (4, 4', 4'') disposées dans des récipients de stockage (3, 3', 3'') selon la revendication 1 ou 2,
**caractérisé en ce que** le dispositif de déchargement (60) est réalisé sous forme d'une station de déchargement à forte capacité à l'aide de laquelle des compositions médicamenteuses (4, 4', 4'') disposées dans des récipients de stockage (3, 3', 3'') sont transférées à un point de prise en charge par une ouverture de déchargement (310) d'un récipient de stockage sur le dispositif de transport.

4. Dispositif de préparation de commandes (1) pour la distribution de compositions médicamenteuses (4, 4', 4'') disposées dans des récipients de stockage (3, 3', 3'') selon la revendication 3,
**caractérisé en ce que** le dispositif de déchargement (60) est réalisé sous forme d'une station de basculement à l'aide de laquelle des compositions médicamenteuses (4, 4', 4'') disposées dans des récipients de stockage (3, 3', 3'') sont basculées à un point de prise en charge par une ouverture de déchargement (310) d'un récipient de stockage sur le dispositif de transport.

5. Dispositif de préparation de commandes (1) pour la distribution de compositions médicamenteuses (4, 4', 4'') disposées dans des récipients de stockage (3, 3', 3'') selon une des revendications 1 à 3,
**caractérisé en ce que** le dispositif de déchargement (60) comprend un dispositif d'expulsion (150) à l'aide duquel des compositions médicamenteuses (4, 4', 4'') disposées dans des récipients de stockage (3, 3', 3'') sont poussées à un point de prise en charge par l'ouverture de déchargement (310) d'un récipient de stockage sur le dispositif de transport.

6. Dispositif de préparation de commandes (1) pour la distribution de compositions médicamenteuses (4, 4', 4'') disposées dans des récipients de stockage (3, 3', 3'') selon une des revendications 1 à 5,
**caractérisé en ce que** le dispositif de déchargement (60) comprend un support de récipient déplaçable (64) qui prend en charge des récipients de stockage (3, 3', 3'') à vider dans une position de garage et les déplace vers une position de vidage.

7. Dispositif de préparation de commandes (1) pour la distribution de compositions médicamenteuses (4, 4', 4'') disposées dans des récipients de stockage (3, 3', 3'') selon la revendication 6,
**caractérisé en ce que** le support de récipient (64) présente un dispositif de retenue (67) à l'aide duquel des récipients de stockage (3, 3', 3'') peuvent être retenus temporairement avec possibilité de relâchement.

8. Dispositif de préparation de commandes (1) pour la distribution de compositions médicamenteuses (4, 4', 4'') disposées dans des récipients de stockage (3, 3', 3'') selon une des revendications 1 à 7,
caractérisé en le dispositif collecteur de récipients (70) est associé au dispositif de déchargement (60), lequel dispositif collecteur de récipients (70) prend en charge les récipients de stockage (3, 3', 3'') vidés dans le dispositif de déchargement (60).

9. Dispositif de préparation de commandes (1) pour la distribution de compositions médicamenteuses (4, 4', 4'') disposées dans des récipients de stockage (3, 3', 3'') selon la revendication 8,
**caractérisé en ce que** le dispositif collecteur de récipients (70) est disposé en-dessous du dispositif de déchargement (60) de manière à ce que les récipients de stockage puissent être acheminés vers le dispositif collecteur de récipients (70) par relâchement du dispositif de retenue (67).

10. Dispositif de préparation de commandes (1) pour la distribution de compositions médicamenteuses (4, 4', 4'') disposées dans des récipients de stockage (3, 3', 3'') selon la revendication 8 ou 9,
**caractérisé en ce que** le dispositif collecteur de récipients (70) présente une ouverture d'accès (73) pouvant être atteinte depuis l'extérieur du dispositif de stockage (2) et par laquelle les récipients de stockage collectés peuvent être prélevés.

11. Dispositif de préparation de commandes (1) pour la distribution de compositions médicamenteuses (4, 4', 4'') disposées dans des récipients de stockage (3, 3', 3'') selon une des revendications 1 à 10,
**caractérisé en ce que** le dispositif de stockage (2) présente au moins un dispositif de distribution (120) disposé au moins par sections dans le rayon d'action de l'unité de commande (20) et pouvant être atteint depuis l'extérieur du dispositif de stockage.

12. Dispositif de préparation de commandes (1) pour la distribution de compositions médicamenteuses (4, 4', 4'') disposées dans des récipients de stockage (3, 3', 3'') selon une des revendications 1 à 11,
**caractérisé en ce que** le dispositif de préparation de commandes (1) présente un dispositif de mise à disposition de récipients (130) pouvant être atteint depuis l'extérieur du dispositif de stockage pour les récipients de stockage.

13. Dispositif de préparation de commandes (1) pour la distribution de compositions médicamenteuses (4, 4', 4'') disposées dans des récipients de stockage (3, 3', 3'') selon une des revendications 1 à 12,
**caractérisé en ce que** le dispositif de préparation de commandes présente au moins deux stations de distribution (80', 80'') qui sont conçues pour divers types d'accès d'utilisateurs différents.

14. Dispositif de préparation de commandes (1) pour la distribution de compositions médicamenteuses (4, 4', 4'') disposées dans des récipients de stockage (3, 3', 3'') selon la revendication 13,
**caractérisé en ce qu'**une des stations de distribution (80'') peut être commandée depuis l'extérieur d'un bâtiment (90) dans lequel le dispositif de stockage (2) est disposé.

15. Dispositif de préparation de commandes (1) pour la distribution de compositions médicamenteuses (4, 4', 4'') disposées dans des récipients de stockage (3, 3', 3'') selon une des revendications 1 à 14,
**caractérisé en ce que** le dispositif de préparation de commandes (1) présente un second dispositif d'identification (45) à l'aide duquel des compositions médicamenteuses (4, 4', 4'') sont identifiées avant un vidage des récipients de stockage dans le dispositif de déchargement (60).

16. Procédé de transfert de compositions médicamenteuses (4, 4', 4'') disposées dans un dispositif de préparation de commandes (1) dans des récipients de stockage (3, 3', 3''), dans lequel
a) une composition médicamenteuse (4, 4', 4'') à transférer est identifiée par le fait qu'un utilisateur met à disposition des données caractéristiques identifiant clairement une composition médicamenteuse à transférer et que l'emplacement de stockage dans le dispositif de préparation de commande (1) est déterminé,
b) une unité de commande (20) est déplacée vers un emplacement de stockage associé à la composition médicamenteuse (4, 4', 4'') à transférer,
c) à l'aide de l'unité de commande (20), un récipient de stockage (3, 3', 3'') comprenant la composition médicamenteuse (4, 4', 4'') est saisi et transféré à un support de récipient (64) d'un dispositif de déchargement (60),
d) le récipient de stockage (3, 3', 3'') transféré au support de récipient (64) est vidé sur le dispositif de transport (50),
e) la composition médicamenteuse (4, 4', 4'') est transportée avec le dispositif de transport (50) vers un point de prélèvement (81) d'une station de distribution (80, 80', 80''), et
f) le point de prélèvement (81) est débloqué sur instruction d'un dispositif de commande (100) couplé à la station de distribution pour prélèvement de la composition médicamenteuse (4, 4', 4'').

17. Procédé de transfert de compositions médicamenteuses (4, 4', 4'') disposées dans un dispositif de préparation de commande (1) dans des récipients de stockage (3, 3', 3'') selon la revendication 16,
**caractérisé en ce que** le support de récipient (64) est disposé avant le transfert du récipient de stockage de manière à ce que l'unité de commande (20) puisse transférer le récipient de stockage par des mouvements de stockage usuels.

18. Procédé de transfert de compositions médicamenteuses (4, 4', 4'') disposées dans un dispositif de préparation de commande (1) dans des récipients de stockage (3, 3', 3'') selon la revendication 16 ou 17,
**caractérisé en ce que** le récipient de stockage (3, 3', 3'') est vidé du fait que le support de récipient (64) est basculé de manière à ce que les compositions médicamenteuses (4, 4', 4'') tombent sur le dispositif de transport (50).

19. Procédé de transfert de compositions médicamenteuses (4, 4', 4'') disposées dans un dispositif de préparation de commandes (1) dans des récipients de stockage (3, 3', 3'') selon une des revendications 16 à 18,
**caractérisé en ce que** le support de récipient (64) est déplacé, avant le vidage du récipient de stockage (3, 3', 3''), d'une position de garage à une position de vidage.

20. Procédé de transfert de compositions médicamenteuses (4, 4', 4'') disposées dans un dispositif de préparation de commande (1) dans des récipients de stockage (3, 3', 3'') selon une des revendications 16 à 19,
**caractérisé en ce que** le récipient de stockage (3, 3', 3'') est déplacé après vidage dans un dispositif collecteur de récipient (70) ou un dispositif de mise à disposition de récipients (130).

21. Procédé de transfert de compositions médicamenteuses (4, 4', 4'') disposées dans un dispositif de préparation de commande (1) dans des récipients de stockage (3, 3', 3'') selon une des revendications 16 à 20,
**caractérisé en ce qu'**une composition médicamenteuse (4, 4', 4'') à transférer est identifiée par le fait que des données personnelles d'un utilisateur sont mises à disposition et exploitées en tant que données caractéristiques.

22. Procédé de transfert de compositions médicamenteuses (4, 4', 4'') disposées dans un dispositif de préparation de commande (1) dans des récipients de stockage (3, 3', 3'') selon la revendication 21,
**caractérisé en ce que**, tant que plusieurs compositions médicamenteuses sont associées à un utilisateur, il est donné à l'utilisateur la possibilité de sélectionner les compositions médicamenteuses à distribuer.

23. Procédé de transfert de compositions médicamenteuses (4, 4', 4'') disposées dans un dispositif de préparation de commande (1) dans des récipients de stockage (3, 3', 3'') selon une des revendications 16 à 22,
**caractérisé en ce que** les étapes suivant l'étape a)
du procédé de transfert ne sont réalisées qu'une fois que toutes les manœuvres de l'utilisateur en lien avec le transfert ont été exécutées de manière satisfaisante.

24. Procédé de transfert de compositions médicamenteuses (4, 4', 4'') disposées dans un dispositif de préparation de commande (1) dans des récipients de stockage (3, 3', 3'') selon une des revendications 16 à 23,
**caractérisé en ce qu'**une composition médicamenteuse (4, 4', 4'') disposée dans des récipients de stockage (3, 3', 3'') est identifiée avant le vidage du récipient de stockage à l'aide du second dispositif d'identification et que le récipient de stockage n'est ensuite vidé sur le dispositif de transport qu'une fois que la composition médicamenteuse (4, 4', 4'') identifiée correspond à la composition médicamenteuse (4, 4', 4'') identifiée à partir des données caractéristiques.

25. Procédé de transfert de compositions médicamenteuses (4, 4', 4'') disposées dans un dispositif de préparation de commande (1) dans des récipients de stockage (3, 3', 3'') selon la revendication 24,
**caractérisé en ce que**, si la composition médicamenteuse (4, 4', 4'') ne correspond pas à la composition médicamenteuse (4, 4', 4'') identifiée à partir des données caractéristiques, est transférée hors du dispositif de stockage.
